# EUROPEAN PATENT SPECIFICATION

(11) **EP 1 887 455 B1**
(45) Date of publication and mention of the grant of the patent: **02.05.2018**
(21) Application number: 07013214.7
(22) Date of filing: 05.07.2007
(51) Int. Cl.: G06F 3/12, H04N 1/00

(54) **Transmit data creation apparatus and transmit data creation program recorded in computer-readable recording medium**
Vorrichtung zur Erstellung von Übertragungsdaten und Programm zur Erstellung von Übertragungsdaten und auf computerlesbarem Aufzeichnungsmedium aufgezeichnetes Programm
Appareils de création de données de transmettre et programme de création de données de transmettre enregistré sur un support d'enregistrement lisible sur un ordinateur

(30) Priority: 07.07.2006 JP 2006187304
(43) Date of publication of application: 13.02.2008
(73) Proprietor: Brother Kogyo Kabushiki Kaisha, Nagoya-shi, Aichi-ken 467-8561 (JP)
(72) Inventor: Oike, Yoko c/o Intellectual Property Dept., Mizuho-ku Nagoya-shi Aichi-ken 467-8562 (JP); Ito, Chitoshi c/o Intellectual Property Dept., Mizuho-ku Nagoya-shi Aichi-ken 467-8562 (JP); Utsumi, Tetsuya c/o Intellectual Property Dept., Mizuho-ku Nagoya-shi Aichi-ken 467-8562 (JP)
(74) Representative: Prüfer & Partner mbB Patentanwälte · Rechtsanwälte

(56) References cited:
- EP-A1- 1 496 443
- JP-A- 2004 157 912
- JP-A- 2005 110 278
- US-A1- 2002 163 666
- US-A1- 2004 130 744

## Description

The present invention relates to a transfer data creation apparatus and a transfer data creation program recorded in a computer-readable recording medium. More specifically, it relates to a transfer data creation apparatus that transfers data used by a printer in printing and a transfer data creation program recorded in a computer-readable recording medium.

Conventionally, a printing system is realized in which a printer is connected to an apparatus such as a personal computer. In such a printing system, data containing information desired to be printed by a printer is transferred from an apparatus such as a personal computer to the printer, which in turn prints the information. However, there is such a case where the information is desired to be printed in the printer even if the printer is not connected with an apparatus such as a personal computer. In such a case, data would be transferred from the apparatus such as a personal computer to the printer to be stored in it so that the data can be printed even when the printer is operating alone. Furthermore, in a printing system of an invention described in, for example, Japanese Patent Application Laid Open Publication No. 2004-157912, a printer is proposed which can store a plurality of data pieces beforehand and print them later even when it is operating alone. In this printing system, the printer is equipped with a plurality of keys. Then, when transferring data to the printer, the data creation apparatus, which corresponds to the apparatus such as a personal computer, assigns the printer keys to the transfer data and sends the data with assignment information of the assigned keys. The printer in turn stores the data and the assignment information and, when any one of the keys is operated, prints the data to which this key is assigned.

Also, conventionally, in an apparatus such as a personal computer, data (files) created with various applications is stored. Accordingly, to manage the files stored in the apparatus such as a personal computer, a file management application program which accompanies an OS displays a folder in which the files are stored, based on path from a route. However, there has been a problem that one cannot easily find the files unless he devises a position or a name of the folder to be stored when the files are saved (stored) and remembers a location where the files are saved. To solve this problem, a computer system has been proposed in which additional information (title, creation date, type of application used in creation, comment, etc.) is created and stored beforehand for each file so that the files may be classified based on above additional information and displayed on a TransferManager screen (see, for example, JP 2005-216129).

However, in such a conventional printing system, when specifying data to be transferred to the printer, a user needs to decide whether the data can be used in the printer. Therefore, there is such a problem that if the user transfers unusable data by mistake, an error occurs in printing. Further, when classifying and displaying the files based on the additional information, it is necessary to take a trouble of creating the additional information, and data without the additional information cannot be classified and displayed, which has been a problem.

JP 2005 110278 A discloses a transfer data creation apparatus comprising: an I/O interface to be connected to a printer; a display device that is adapted to display information; a data storage device that is adapted to store a plurality of types of data; a data information display control device that is adapted to selectively display, on the display device, data information which relates to the data stored in the data storage device and contains at least a name of the data; a transfer data specification device that is adapted to select the data information displayed on the display device to thereby specify such a data piece of the data stored in the data storage device as to be transferred from the transfer data creation apparatus to the printer so that the data piece may be printed by the printer; a specified data display control device that is adapted to display on the display device the data information of specified data, which is the data specified by the transfer data specification device; a transfer data creation device that is adapted to create transfer data which is used to transfer the specified data from the transfer data creation apparatus to the printer; a printable type storage device that is adapted to store enabled type information which identifies a type of the data that can be printed for the printer; a data extraction device that is adapted to extract the data of a type printable in the transfer destination printer from the data stored in the data storage device based on the enabled type information, wherein the data information display control device is adapted to display only the data information of extracted data, which is the data extracted by the data extraction device.

It is the object of the present invention to provide a transfer data creation apparatus and a computer-readable recording medium that enable easily selecting data to be transferred.
This object is achieved by the transfer data creation apparatus having the features of claim 1 and by the computer-readable recording medium having the features of claim 10. The invention is further developed as set forth in the dependent claims.

Exemplary embodiments of the present disclosure will be described below in detail with reference to the accompanying drawings in which:
FIG. 1 is an outlined perspective view of a tape printer;
FIG. 2 is a block diagram showing an electrical constitution of a transfer data creation apparatus;
FIG. 3 is an explanatory table showing a constitution of an enabled type information storage area;
FIG. 4 is a table showing types of tapes on which information can be printed, for each of printers;
FIG. 5 is a schematic diagram showing a constitution of an RAM ;
FIG. 6 is an explanatory table showing a constitution of a PT-1650 storage area in the RAM ;
FIG. 7 is an explanatory view of a TransferManager screen;
FIG. 8 is an explanatory view of another TransferManager screen;
FIG. 9 is an explanatory view of a further TransferManager screen;
FIG. 10 is an explanatory view of a still further TransferManager screen;
FIG. 11 is an explanatory view of an additional TransferManager screen;
FIG. 12 is a flowchart of main processing;
FIG. 13 is a flowchart of display update processing which is performed in the main processing;
FIG. 14 is a flowchart of data extraction processing which is performed in the display update processing;
FIG. 15 is a flowchart of file specification processing which is performed in the main processing; and
FIG. 16 is a flowchart of transfer processing which is performed in the main processing.

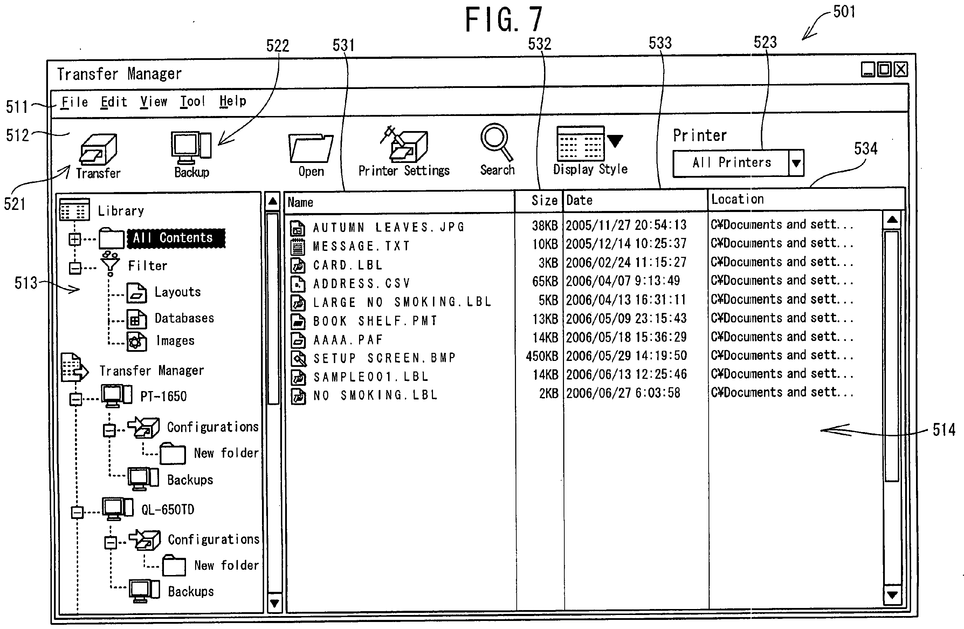

The following will describe a transfer data creation apparatus 10 according to an embodiment of the present disclosure, with reference to drawings. The transfer data creation apparatus 10 of the present disclosure transfers files of various types of data to a printer, wherein the types of data are used to print information in the printer. The printer can print various types of data (for example, bitmap data serving as image data, print data created by printer-dedicated software, etc.). In the transfer data creation apparatus 10, by activating a transfer data creation program, a TransferManager screen (see FIGS. 7 through 11) is displayed. Then, on this screen, a file to be printed in a printer connected to the transfer data creation apparatus 10 can be selected and transferred to the printer.

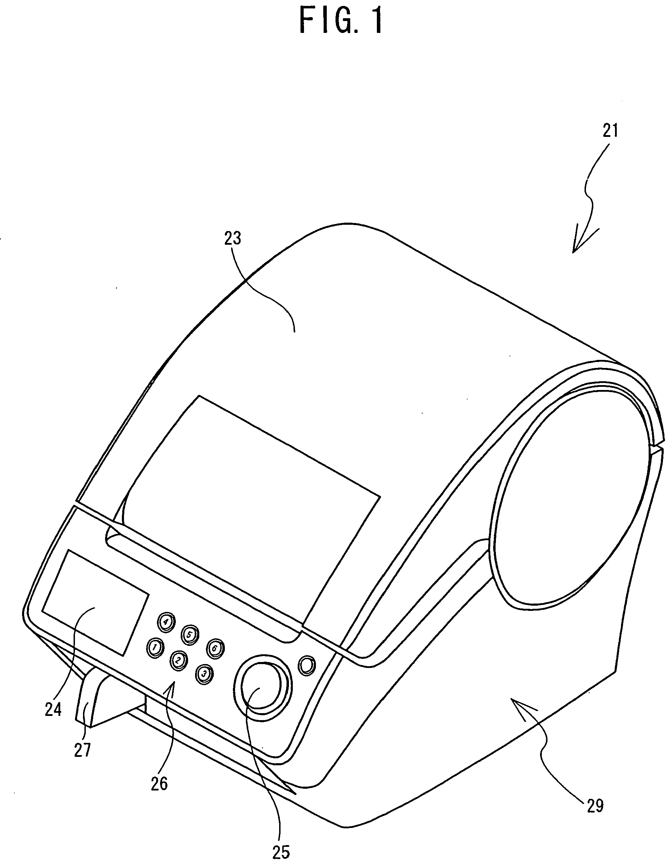

First, a tape printer 21 will be described as one example of a printer connected to a transfer data creation apparatus 10 with reference to FIG. 1. The tape printer 21 is equipped with a tape holder housing unit, not shown, and a print mechanism unit, not shown, behind a body chassis 29 whose bottom is roughly rectangular. In the tape holder housing, a roll tape around which a tape serving as a substrate is housed. The print mechanism unit is equipped with a platen roller which conveys the tape and a thermal head which prints information. Also, at a rear upper edge of the tape printer 21, an upper cover 23 made of transparent resin is provided which is attached in an open/close manner in such a manner as to cover an upper side of the tape holder housing unit and the print mechanism unit. On a front surface of the body chassis 29, a cut lever 27 is provided which horizontally moves a cutter unit, not shown, which cuts off the tape. Further, on the front side of the upper surface of the body chassis 29 are provided a power button 25, six input keys 26 which input print instructions, and a liquid crystal display (LCD) 24. It should be noted that the input keys 26 are assigned numbers from "1" to "6" so that files transferred from the transfer data creation apparatus 10 may be stored corresponding to these numbers. Then, if a user presses any one of the input keys 26, data of a file that corresponds to the number is printed by a print mechanism.

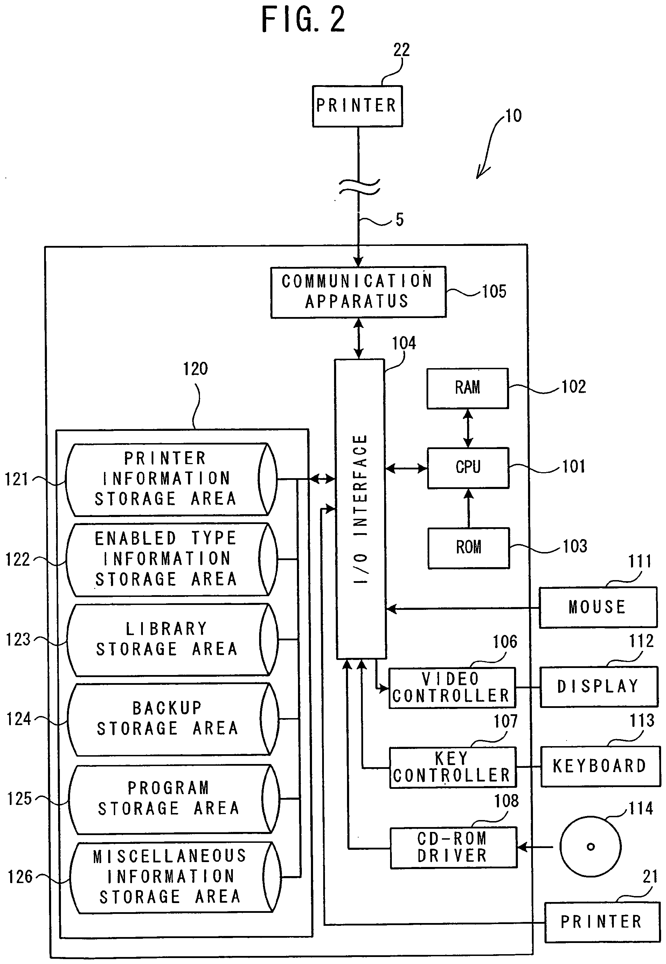

Next, the transfer data creation apparatus 10 will be described with reference to FIGS. 2 through 6. As shown in FIG. 2, the transfer data creation apparatus 10 is equipped with a CPU 101 which performs as a controller controlling the transfer data creation apparatus 10. To the CPU 101 are connected an RAM 102 which temporarily stores various types of data, an ROM 103 which stores a BIOS etc., and an I/O interface 104 which mediates transfer of data. To the I/O interface 104 is connected a hard disk apparatus 120. This hard disk apparatus 120 is provided with at least a printer information storage area 121, an enabled type information storage area 122, a library storage area 123, a backup storage area 124, a program storage area 125, and a miscellaneous information storage area 126.

Further, a mouse 111, a video controller 106, a key controller 107, and a CD-ROM drive 108 are connected to the I/O interface 104. A display 112 is connected to the video controller 106, and a keyboard 113 is connected to the key controller 107. It should be noted that a CD-ROM 114 inserted into the CD-ROM drive 108 stores the transfer data creation program. Upon introduction, the transfer data creation program is stored from the CD-ROM 114 into the program storage area set up in the hard disk apparatus 120.

Also, the printer 21 is connected to the I/O interface 104. Further, to the I/O interface 104 is connected a communication apparatus 105 which connects to a local area network (LAN) 5. The transfer data creation apparatus 10 is connected also to a printer 22 on the LAN 5 via the communication apparatus 105.

The following will describe in detail the storage areas of the hard disk apparatus 120. The printer information storage area 121 in the hard disk apparatus 120 stores information about a printer that can be connected to the transfer data creation apparatus 10. The information about the printer refers to that which is stored when a so-called printer driver is installed and unique to each of the printers. For example, it includes a minimum margin value, the number of keys, etc. for each printer. The enabled type information storage area 122 stores information about whether various type of data can be printed for each printer (in which the printer driver is already installed) that can be connected to the transfer data creation apparatus 10. The library storage area 123 stores a file of data to be transferred to the printer. The backup storage area 124 stores a file (backup file) of data acquired from the printer. The program storage area 125 stores the transfer data creation program which is executed by the CPU 101. The miscellaneous information storage area 126 stores miscellaneous information which is used in the transfer data creation apparatus 10.

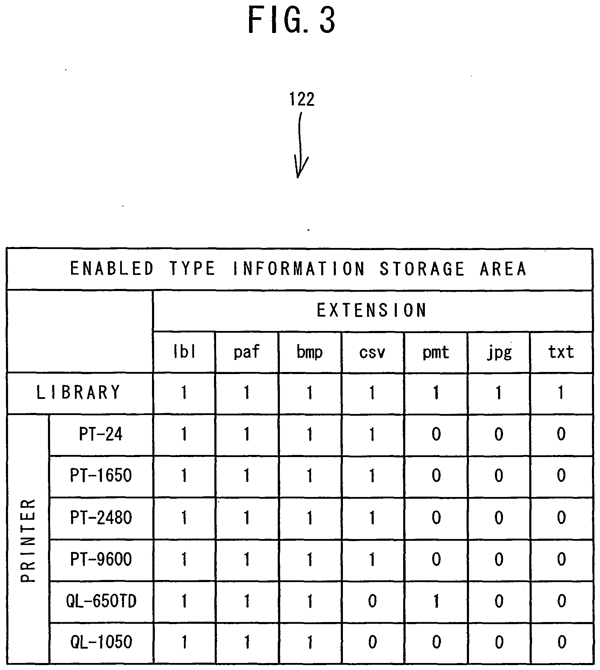

Next the enabled type information storage area 122 will be described in detail with reference to FIG. 3. As shown in FIG. 3, the enabled type information storage area 122 stores types of data which can be stored in the library storage area 123 and types of data which can be printed for each printer. In the present embodiment, it is supposed that printers of six models of "PT-24", "PT-1650", "PT-2480", "PT-9600", "QL-650TD", and "QL-1050" can be connected to the transfer data creation apparatus 10. It is also supposed that data of seven extensions of "lbl", "paf", "bmp", "csv", "pmt", "jpg", and "txt" can be stored in the library storage area 123. It should be noted that, if "1" is stored in the library storage area 123, it indicates that data of these extensions can be stored or printed and, if "0" is stored in the library storage area 123, it indicates that the data cannot be stored or printed.

It should be noted that the "lbl" is indicative of data which is created by dedicated software to create data to be printed by a printer having any one of the model names of "PT-24", "PT-1650", "PT-2480", "PT-9600", "QL-650TD", and "QL-1050". Further, the "paf" is also indicative of data which is created by this dedicated software. The "bmp" is indicative of image data of a still image referred to as a bitmap file. The "csv" is indicative of data which is described in a general-purpose format referred to as Common Separated Value. The "pmt" is indicative of data which is created by predetermined layout software. The "jpg" is indicative of image data of a still image given in a compressed format. The "txt" is indicative of text data.

As shown in FIG. 3, the library storage area 123 can store all extensions of information. A printer of "PT-24" can print information of "lbl, "paf", "bmp", and "csv". A printer of "PT-1650" can print information of "lbl, "paf", "bmp", and "csv". A printer of "PT-2480" can print information of "lbl, "paf", "bmp", and "csv". A printer of "PT-9600" can print information of "lbl, "paf", "bmp", and "csv". A printer of "QL-650TD" can print information of "lbl, "paf", "bmp", and "pmt". A printer of "QL-1050" can print information of "lbl, "paf", and "bmp".

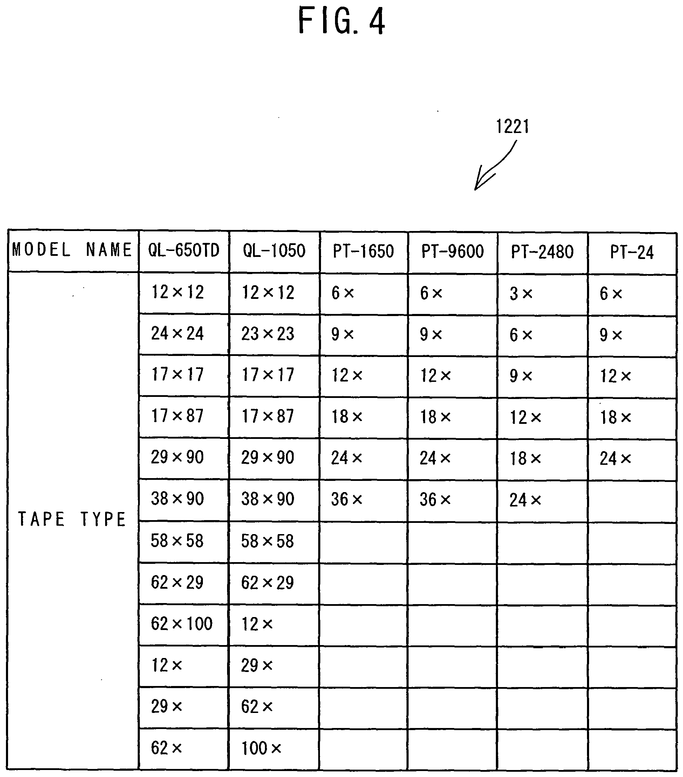

Next, types of tapes on which information can be printed in each of the printers will be described with reference to FIG. 4. Table 1221 of FIG. 4 summarizes information stored in the printer information storage area 121. As shown in Table 1221, different models of printers have different types of tapes on which information can be printed. It should be noted that "6X" is indicative of a tape having a width of 6mm and an undefined length and "12X12" is indicative of a tape having a mount on which a 12mm-by-12mm die cut label is stuck.

A printer of "QL-650TD" can print information on tapes of "12X12", "24X24", "17X17", "17X87", "29X90", "38X90", "58X58", "62X29", "62X100", "12X", "29X", and "62X". A printer of "QL-1050" can print information on tapes of "12X12", "23X23", "17X17", "17X87", "29X90", "38X90", "58X58", "62X29", "12X", "29X", "62X", and "100X". A printer of "PT-1650" can print information on tapes of "6X", "9X, "12X", "18X", "24X", and "36X". A printer of "PT-9600" can print information on tapes of "6X", "9X, "12X", "18X", "24X", and "36X". A printer of "PT-2480" can print information on tapes of "3X", "6X", "9X, "12X", "18X", and "24X". A printer of "PT-24" can print information on tapes of "6X", "9X, "12X", "18X", and "24X".

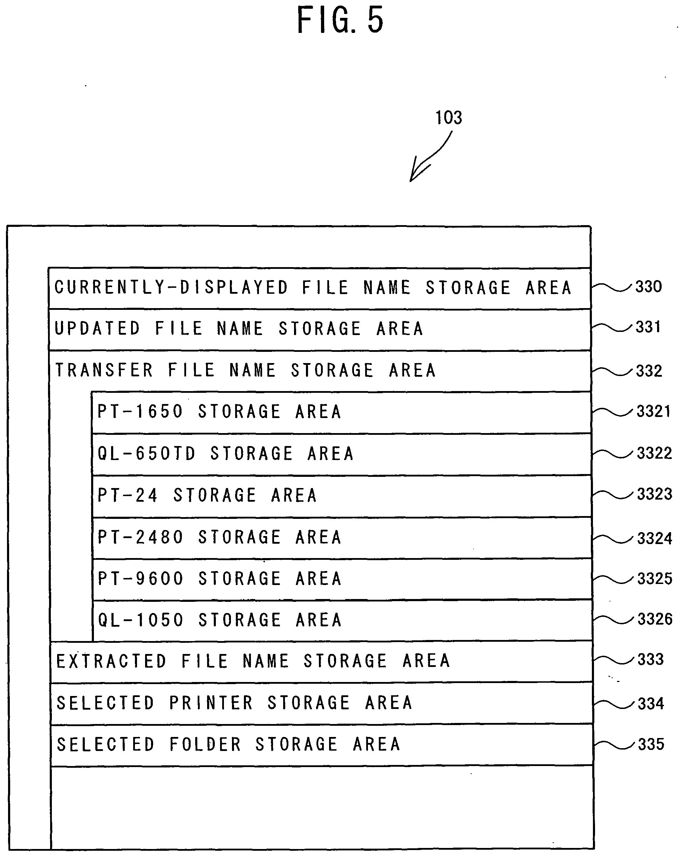

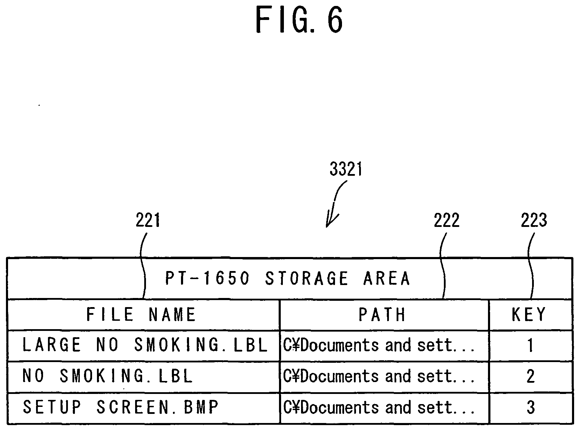

Next, the RAM 103 will be described in detail with reference to FIG. 5. The RAM 103 has a currently-displayed file name storage area 330, an updated file name storage area 331, a transfer file name storage area 332, an extracted file name storage area 333, a selected printer storage area 334, a selected folder storage area 335, etc. The transfer file name storage area 332 contains a storage area for each model of printer that can be connected to the present transfer data creation apparatus 10. Specifically, it contains a PT-1650 storage area 3321, a QL-650TD storage area 3322, a PT-24 storage area 3323, a PT-2480 storage area 3324, a PT-9600 storage area 3325, and a QL-1050 storage area 3326 (see FIG. 6). It should be noted that the RAM 103 has also a storage area, not shown.

The currently displayed file name storage area 330 stores a file name of a file being displayed in a details display region 514 on TransferManager screens 501 through 505 shown in FIGS. 7 through 11 respectively. The updated file name storage area 331 is used to store a file name of a file which is displayed after being updated in response to an instruction to switch what is displayed in the details display region 514. The transfer file name storage area 332 stores file names of files to be transferred for each printer. The extracted file name storage area 333 is used to extract a file in a case where files to be displayed in the details display region 514 are limited depending on a type of a printer. The selected printer storage area 334 stores a model name of a printer selected in a printer selection list box 523 on the TransferManager screens 501 through 505 shown in FIGS. 7 through 11 respectively. The selected folder storage area 335 stores a folder selected in a folder display region 513.

Next, the PT-1650 storage area 3321 is described in detail with reference to FIG. 6. The PT-1650 storage area 3321 is given in the transfer file name storage area 332 and has much the same constitution as that of the storage areas in any other models of printers. As shown in FIG. 6, the PT-1650 storage area 3321 has a file name field 221, a path field 222, and a key field 223. The file name field 221 stores a file name of a file to be transferred. The path field 222 stores a path that indicates a position where the library storage area 123, which is where this file is stored, is stored. The key field 223 stores a value that indicates which one of the keys in the printer is selected for calling.

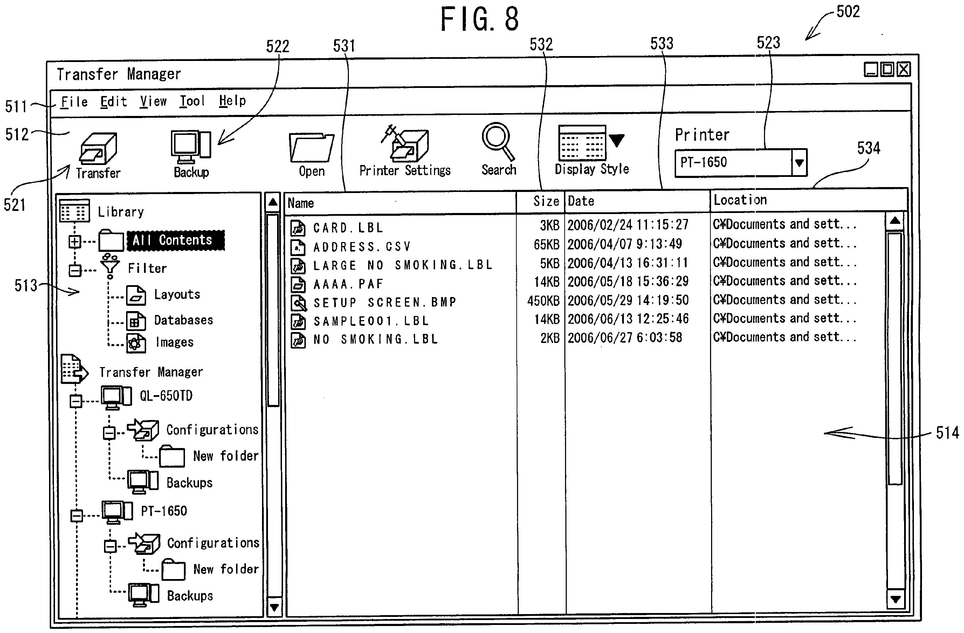

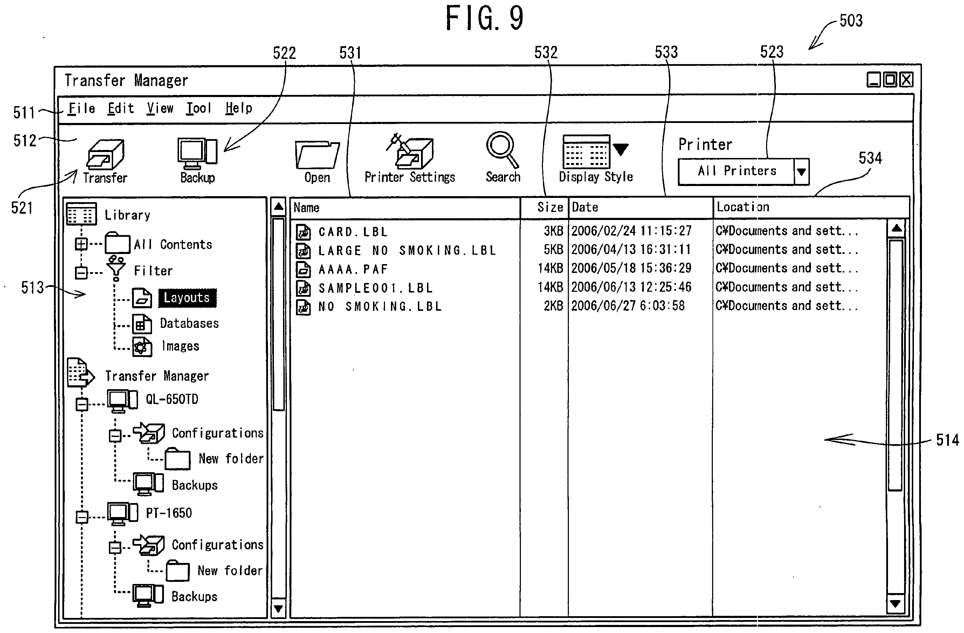

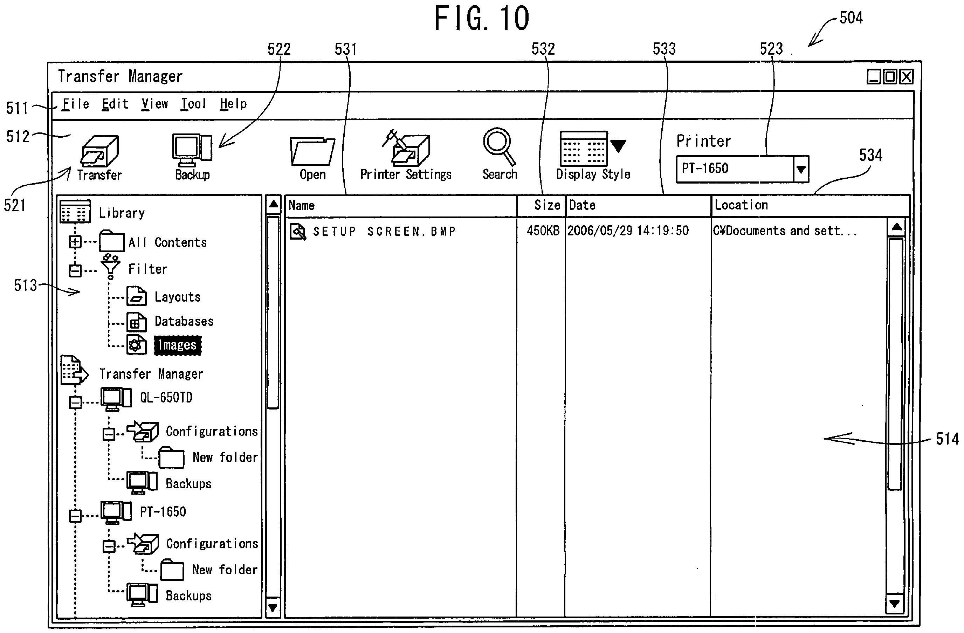

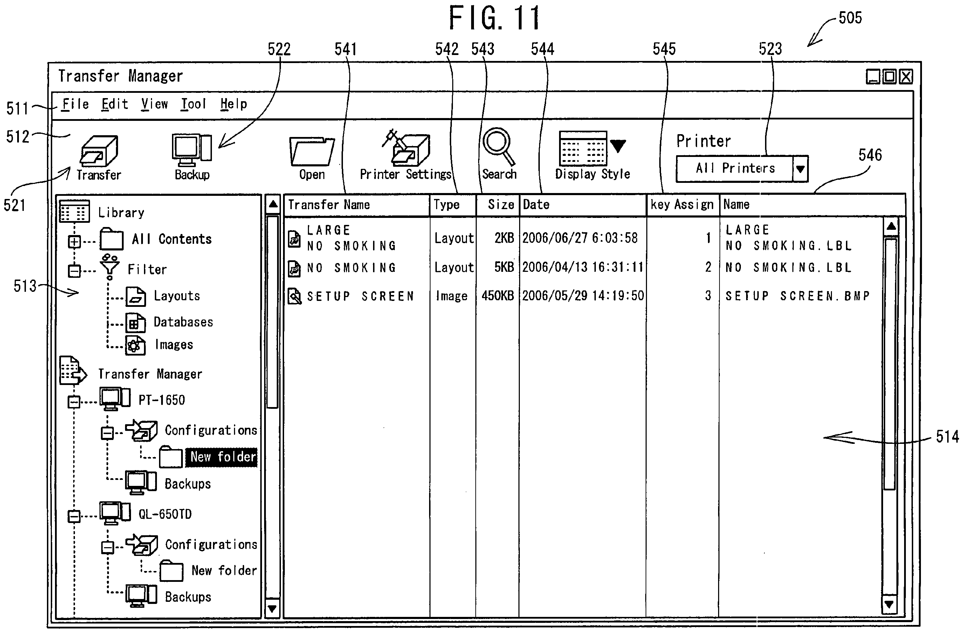

Next, the TransferManager screens 501 through 505 will be described with reference to FIGS. 7 through 11 respectively. The TransferManager screens 501 through 505 appear on the display 112 when the transfer data creation program is activated. FIG. 7 shows the TransferManager screen 501, which appears if an "All Contents" folder, which displays information of all files, is selected. FIG. 8 shows the TransferManager screen 502, on which information is displayed only of such a file out of those in the "All Contents" folder as to be printable in a printer of a model name of "PT-1650". FIG. 9 shows the TransferManager screen 503, on which information is displayed only of a file with an extension whose file type belongs to "Layouts". FIG. 10 shows the TransferManager screen 504, on which information is displayed only of such a file out of those with an extension whose file type belongs to "Images" as to be printable in a printer having a model name of "PT-1650". FIG. 11 shows the TransferManager screen 505, on which information is displayed of a file to be transferred to a printer of a model name of "PT-1650".

As shown in FIGS. 7 through 11, the TransferManager screens 501 through 505 each have at their upper part a menu bar 511 and an icon bar 512 for giving a variety of instructions. They each have at their left part a folder display region 513, and on the right side of the folder portion a details display region 514 is provided. The details display region 514 displays information about files that belong to a folder selected in the folder display region 513. It should be noted that the folder selected in the folder display region 513 is already stored in the selected folder storage area 335.

The following will describe in details the folder display region 513. In this region, several folders are displayed hierarchically. As highest-hierarchy folders, folders "Library" and "Transfer Manager" are provided. If the "Library" folder or a folder lower than that in hierarchy is selected, information of files stored in the library storage area 123 is displayed in the details display region 514.

Immediately below the "Library" folder in hierarchy are provided folders "All Contents" and "Filter". If the "All Contents" folder is selected, information about all files stored in the library storage area 123 is displayed in the details display region 514 (see the TransferManager screen 501 of FIG. 7). Information about files refers to, for example, a file name (Name field), a file size (Size field), an updated date and time (Date field), and a path up to a storage location (Location field). It should be noted that other information may be displayed such as, for example, a creator, a creation date and time, and a data type (Layout, Image, etc.).

Further below the "Filter" folder are provided folders "Layouts", "Databases", and "Images". These folders are used to display files stored in the library storage area 123, for each type of data of the files. If the "Layouts" folder is selected, the details display region 514 displays information of files which have extension "lbl" or "paf" and are created by dedicated software (see the TransferManager screen 503 of FIG. 9). Also, if the "DataBases" folder is selected, the details display region 514 displays information of files which have extension "csv". Further, if the "Images" folder is selected, the details display region 514 displays information of files which have extension "bmp" or "jpg". It should be noted that information about which extension of files are displayed in which folder is stored in the miscellaneous information storage area 126.

Below the "Transfer Manager" folder in hierarchy, a folder is provided of model names of printers that can be connected to the present transfer data creation apparatus 10. In the examples shown in FIGS. 7 through 11, model name folders "QL-650TD" and "PT-1650" are displayed. It should be noted that folders of other model names are also provided in the same hierarchy and so can be displayed by moving a scroll bar. Below the folder of each model name in hierarchy, folders "Configurations" and "Backups" are provided. The "Configurations" folder is used to contain a file to be transferred to a printer, further below which a folder can be created. In the examples of FIGS. 7 through 11, folder "New folder" is created. Further, for example, it is also possible to use date and time of transfer of folder "20060625" or "20060701" as a folder name in management such as division of a folder. In this case, in the transfer file name storage area 332 that corresponds to each printer such as the PT-1650 storage area 3321, file information is stored for each folder.

The following will describe user operations to put a transfer file into the "Configurations" folder or a folder immediately below it in hierarchy (for example, "New folder" folder). According to one method, drag by using the mouse 111 a file displayed in the details display region 514 in a state where any one folder of the "Library" folders is selected. Then, move it to a folder of a transfer-destination printer, for example, the "New folder" folder and release it. According to another method, select by using the mouse 111 or the keyboard 113 a file displayed in the details display region 514 in a state where any one folder of the "Library" folders is selected. Then, select "File" menu on the menu bar 511 and select "Specify as transfer file" in the "File" menu. Then, select a folder of a transfer-destination printer, for example, the "New folder" folder and select the "File" menu again on the menu bar 511 and also select "Transmit to this printer" in the "File" menu. In such a manner, a name of the file is stored in the storage area of the relevant printer in the transfer file name storage area 332. Alternatively, icons for performing these instructions may be provided on the icon bar 512.

Next, the "Backups" folder will be described below. The transfer data creation program performs operations to acquire a file stored in a printer connected and store it as a backup in the backup storage area 124. The backup operations are performed by selecting a Backup icon 522 on the icon bar 512 or selecting "Tool" menu on the menu bar 511 and "Backup" menu. If "Backups" folder is selected subsequently, information of the folder stored in the backup storage area 124 is displayed in the details display region 514.

It should be noted that information about files which are displayed in the details display region 514 if the "Configurations" folder or a folder lower than it (folders "New folder" or "Backups") in hierarchy is selected comes in a transfer data name (Transmit Name field), a data type (Type field), a file size (Size field), an updated date/time (Date field), a number that specifies a key of a printer (Key Assign field), and a file name (Name field) . Also, at a leftmost part of the icon bar 512 is provided a Transfer icon 521. If this Transfer icon 521 is selected or the "File" menu on the menu bar 511 is selected to choose menu "Transmit" in a state where the folder lower than the "Configurations" folder (folder "New folder") in hierarchy is selected, a file whose information is displayed in that folder is read from the library storage area 123 and transferred to a transfer-destination printer.

Next, the printer selection list box 523 which is provided on the icon bar 512 will be described. The printer selection list box 523 is used to limit information of files to be displayed in the details display region 514. The printer selection list box 523 lists, as selectable items, "All Printers" and names of printers whose information is stored in the printer information storage area 122. If "All Printers" is selected, the region displays all of files of data of types that can be stored in the library storage area 123 (data having any one of extensions "lbl", "paf", "bmp", "csv", "pmt", "jpg", and "txt" in the present embodiment). However, if a name of a printer is selected, the details display region 514 displays only files of data having an extension stored in the enabled type information storage area 122 as something indicative of printability in a selected printer. It should be noted that information about which one of a printer or "All Printers" is selected in the printer selection list box 523 is stored in the selected printer storage area 334.

If "All Contents" folder is selected in the folder display region 513 and "All Printers" is selected in the printer selection list box 523 as shown on the TransferManager screen 501 of FIG. 7, the details display region 514 displays information of all files stored in the library storage area 123. Specifically, it displays "autumn leaves.jpg", "message.txt", "card.lbl", "address.csv", "large no smoking.lbl", "book shelf.pmt", "aaaa.paf", "setup screen.bmp", "sample001.lbl", and "no smoking.lbl". It should be noted that the Name field gives also an icon that indicates a type of a file together with a name of the file. Then, if the "All Contents" folder is selected and "PT-1650" is selected in the printer selection list box 523, only a file of data of such a type printable in a PT-1650 printer is extracted and displayed in the details display region 514. Specifically, as shown on the TransferManager screen 502 of FIG. 8, three files "autumn leaves.jpg", "message.txt", and "book shelf.pmt" which are displayed on the TransferManager screen 501 of FIG. 7 are not displayed. This is because data having extension "pmt", "jpg", or "txt" cannot be printed in the PT-1650 as shown in the enabled type information storage area 122 of FIG. 3.

Further, if the "layouts" folder is selected and "All Printers" is selected in the printer selection list box 523 as shown on the TransferManager screen 503 of FIG. 9, only a file having extension "lbl" or "paf" is displayed. Specifically, only the five files of "card.lbl", "large no smoking.lbl", "aaaa.paf", "sample001.lbl", and "no smoking.lbl" are displayed. That is, "autumn leaves.jpg", "message.txt", "address.csv", "book shelf.pmt", and "setup screen.bmp" which are displayed on the TransferManager screen 501 of FIG. 7 are not displayed.

Further, if the "Images" folder is selected and "PT-1650" is selected in the printer selection list box 523 as shown on the TransferManager screen 504 of FIG. 10, only "setup screen.bmp" is displayed. There is another "autumn leaves.jpg" file that has a data type of "Images". However, as shown in the enabled type information storage area 122 of FIG. 3, it is not displayed because the PT-1650 printer cannot print data having extension "jpg".

Further, if the "New folder" folder in the "Configurations" folder in the "PT-1650" folder lower than the "Transfer Manager" folder in hierarchy is selected as shown on the TransferManager screen 505 of FIG. 11, information is displayed of a file stored in the PT-1650 storage area 3321. In this case, key numbers "1", "2", and "3" are assigned to "large no smoking.lbl", "no smoking.lbl", and "setup screen.bmp" respectively.

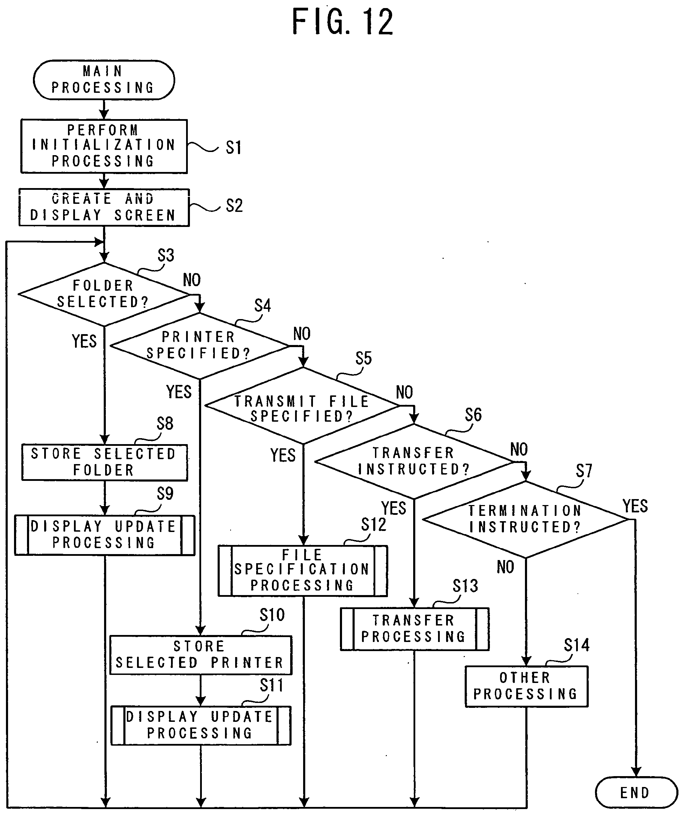

Next, control will be described on the transfer data creation program which is executed in the CPU 101 of the transfer data creation apparatus 10, with reference to flowcharts of FIGS. 12 through 16. First, main processing indicated in FIG.12 starts when the transfer data creation program is activated in the transfer data creation apparatus 10. First, the process performs initialization processing to reserve the various storage areas and initialize them (S1). Then, the TransferManager screen 501 is created and indicated on the display 112 (S2). In this case, the TransferManager screen 501 shown in FIG. 7 is indicated on the display 112. That is, the "All Contents" folder is selected as an initial value and "All Printers" is selected in the printer selection list box 523. Further, a model name of a printer stored in the printer information storage area 121 of the hard disk apparatus 120 is read, to determine a folder to be displayed in the folder display region 513. Moreover, a storage area for each printer is also reserved in the transfer file name storage area 332.

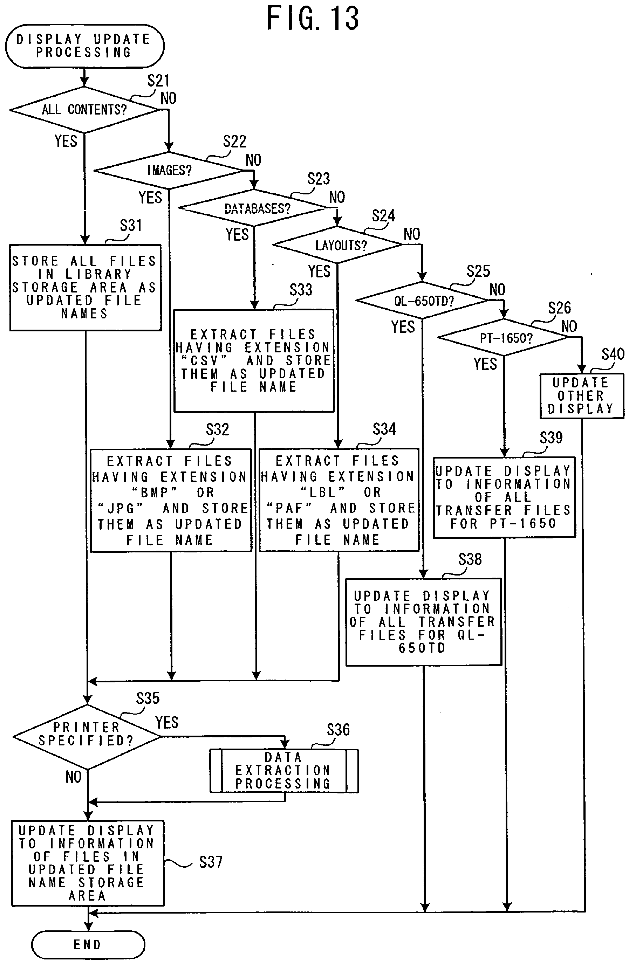

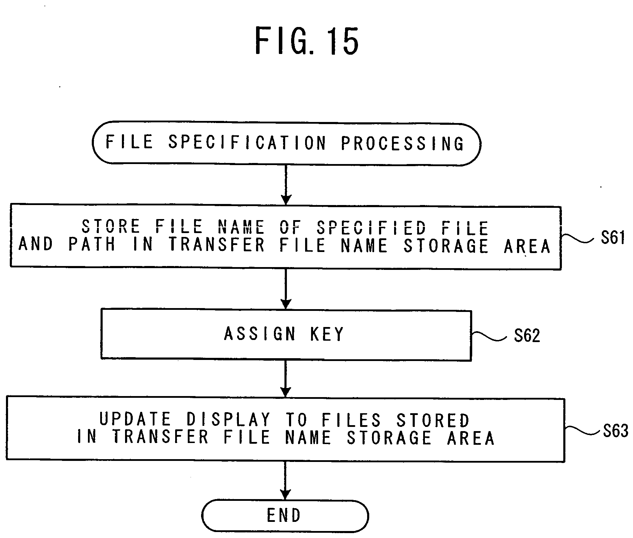

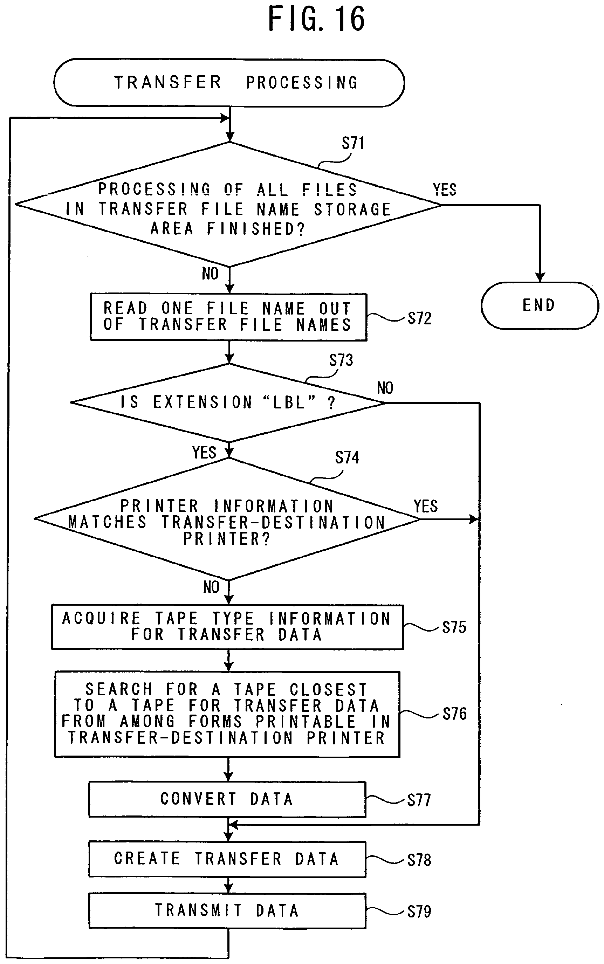

Subsequently, the process decides whether processing has been performed to select any one of folders in the folder display region 513 (S3). If the processing to select any one of the folders is performed (YES at S3), the process stores the selected folder in the selected folder storage area 335 (S8) and performs display update processing (S9, see FIG. 13). On the other hand, if the process to select a folder is not performed (NO at S3) but processing to specify a printer in the printer selection list box 523 is performed (YES at S4), the process stores the selected printer or information indicative of "All Printers" in the selected printer storage area 334 (S10) and performs the display update processing (S11, see FIG. 13). Further, if the processing to specify a printer in the printer selection list box 523 is not performed (NO at S4) but processing to specify a transfer file is performed (YES at S5), the process performs file specification processing (S12, see FIG. 15). Further, if the processing to specify a transfer file is not performed (NO at S5) but transfer is instructed (YES at S6), the process performs transfer processing (S13, see FIG. 16). Further, if transfer is not instructed (NO at S6) but termination is instructed (YES at S7), the main processing ends. On the other hand, if termination is not instructed either (NO at S7), the process performs other processing (S14) . It should be noted that "other processing" refers to backup processing etc. Then, the process returns to S3, to repeat processing from S3 to S7 so that processing may be performed on the basis of a user's instruction until termination is instructed. Termination is instructed by selecting "END" in the "File" menu on the menu bar 511 or performing an instruction to close the TransferManager screen.

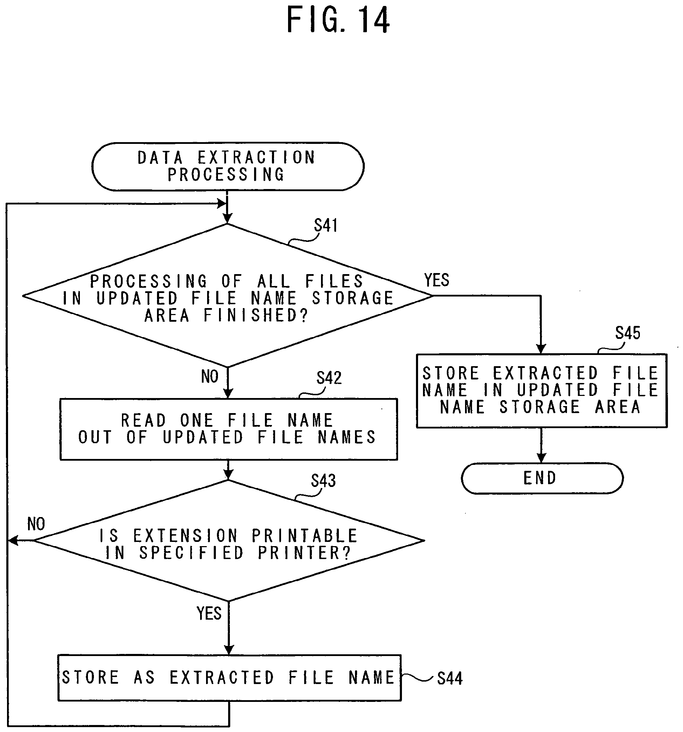

The following will describe the display update processing with reference to the flowcharts of FIGS. 13 and 14. The display update processing is performed if any one of folders in the folder display region 513 is selected by operating the mouse 111 or the keyboard 113 (YES at S3) or if a printer is selected in the printer selection list box 523 (YES at S4).

First, the process decides whether the "All Contents" folder is selected (S21). If the "All Contents" folder is selected (YES at S21), the process stores file names of all files stored in the library storage area 123 into the updated file name storage area 331 (S31). Then, the process decides whether a printer is specified in the printer selection list box 523 (S35) . If a value indicative of any printer other than "All Printers" is stored in the selected printer storage area 334 (YES at S35), the process performs data extraction processing to extract only files that can be printed in the specified printer (S36, see FIG. 14). On the other hand, if a value indicative of "All Printers" is stored (NO at S35), the data extraction processing is not performed. Then, the process updates information displayed in the details display region 514 to the information of the files having the file names stored in the updated file name storage area 331 (S37) . Then, the process ends the display update processing and returns to the main processing.

Further, if the "All Contents" folder is not selected (NO at S21) but the "Images" folder is selected (YES at S22), the process extracts files that have extension "bmp" or "jpg" from all the files stored in the library storage area 123 and stores them in the updated file name storage area 331 (S32) . If, in this case, a printer is specified in the printer selection list box 523 and a value indicative of any printer other than "All Printers" is stored in the selected printer storage area 334 (YES at S35), the process performs the data extraction processing to extract only files that can be printed by the selected printer (S36, see FIG. 14). On the other hand, if a value indicative of "All Printers" is selected (NO at S35), the data extraction processing is not performed. Then, the process updates information displayed in the details display region 514 to the information of the files having the file names stored in the updated file name storage area 331 (S37). Then, the process ends the display update processing and returns to the main processing.

Further, if the "Images" folder is not selected (NO at S22) but the "DataBases" folder is selected (YES at S23), the process extracts files that have extension "csv" from all the files stored in the library storage area 123 and stores them in the updated file name storage area 331 (S33). If, in this case, a printer is specified in the printer selection list box 523 and a value indicative of any printer other than "All Printers" is stored in the selected printer storage area 334 (YES at S35), the process performs the data extraction processing to extract only files that can be printed by the selected printer (S36, see FIG. 14). On the other hand, if a value indicative of "All Printers" is stored (NO at S35), the data extraction processing is not performed. Then, the process updates information displayed in the details display region 514 to the information of the files having the file names stored in the updated file name storage area 331 (S37) . Then, the process ends the display update processing and returns to the main processing.

Further, if the "DataBases" folder is not selected (NO at S23) but the "Layouts" folder is selected (YES at S24), the process extracts files that have extension "lbl" or "paf" from all the files stored in the library storage area 123 and stores them in the updated file name storage area 331 (S34). If, in this case, a printer is specified in the printer selection list box 523 and a value indicative of any printer other than "All Printers" is stored in the selected printer storage area 334 (YES at S35), the process performs the data extraction processing to extract only files that can be printed by the selected printer (S36, see FIG. 14). On the other hand, if a value indicative of "All Printers" is stored (NO at S35), the data extraction processing is not performed. Then, the process updates information displayed in the details display region 514 to the information of the files having the file names stored in the updated file name storage area 331 (S37) . Then, the process ends the display update processing and returns to the main processing.

Further, if the "Layouts" folder is not selected (NO at S24) but the "Configurations" folder lower than the "QL-650TD" folder or any other lower folder in hierarchy ("New folder" in FIGS. 7 through 11) is selected (YES at S25), the process stores file names of files stored in the QL-650TD storage area 3322 into the currently-displayed file name storage area 330 and updates display of the details display region 514 (S38). Then, the process ends the display update processing and returns to the main processing.

Further, if the "QL-650TD" folder is not selected (NO at S25) but the "Configurations" folder lower than the "PT-1650" folder or any other lower folder in hierarchy ("New folder" in FIGS. 7 through 11) is selected (YES at S26), the process stores file names of files stored in the PT-1650 storage area 3321 into the currently-displayed file name storage area 330 and updates display of the details display region 514 (S39). Then, the process ends the display update processing and returns to the main processing.

Further, if the "PT-1650" folder is not selected either (NO at S26), the process performs other processing (S40) . For example, if a folder of any other model of printer is selected, as in the case of QL-650TD or PT-1650, the process updates the details display region 514 by using information stored in the storage area of this printer in the transfer file name storage area 332, information of which is omitted. Further, the other processing involves also deletion of file names stored in the transfer file name storage area 332.

The following will describe data extraction processing with reference to FIG. 14. In the data extraction processing, the process decides whether each file whose file name is stored in the updated file name storage area 331 has an extension which indicates that the file should be displayed. If, as a result, it is decided that the file should be displayed, its name is stored in the extracted file name storage area 333. Finally, the file names stored in the extracted file name storage area 333 are stored in the updated file name storage area 331. Then, first the process decides whether the processing is finished on all the files in the updated file name storage areas (S41). If there is any file to be read, the processing is yet to be finished (NO at S41), so that one file name is read from the updated file name storage area 331 (S42) .

Subsequently, from the enabled type information storage area 122, the process reads information about an extension of the read file in the printer stored in the selected printer storage area 334 and decides whether the file can be printed ("1" is stored) (S43). If it is printable (YES at S43), the process stores the file name in the extracted file name storage area 333 (S44) . Then, the process returns to S41. On the other hand, if it is not printable (NO at S43), the process does nothing and returns to S41. That is, if the selected printer is of "PT-1650" and the extension is "lbl", the process decides it is printable (YES at S43) and stores its file name in the extracted file name storage area 333 (S44). On the other hand, if the extension is "txt", the process decides it is unprintable (NO at S43) and does not store its file name in the extracted file name storage area 333.

Then, the process repeats the processing from S41 to S44 until there is no more file name to be read and the processing is finished on all the files (YES at S41), whereupon the updated file name storage area 331 is cleared. Then, the process stores the file names stored in the extracted file name storage area 333 into the updated file name storage area 331 (S45) to end the data extraction processing and returns to the display update processing.

Next, file specification processing which is performed if a transfer file is specified will be described with reference to a flowchart shown in FIG. 15. The present processing starts if a file, displayed in the details display region 514 in a state where any one folder of folders in the "Library" folder is selected, is selected by operating the mouse 111 or the keyboard 113 and attached to a folder of a transfer-destination printer.

First, the process stores a file name of the selected file and a path respectively in the file name field 221 and the path field 222 (see FIG. 6) in the storage area of the printer of a specified folder in the transfer file name storage area 332 (S61) . For example, if the file is attached to the PT-1650's folder, they are stored in the PT-1650's storage area 3321. Then, a maximum assigned number stored in the key field 223 plus "1" is stored in the key field 223 (S62) . It should be noted that if transfer files are already stored as many as the number of the keys of the printer, an error message will appear, which says, for example, "To all the keys is assigned a file. To add a file, delete any one of the existing files". Then, the process updates the details display region 514 to information of the files stored in the transfer file name storage area 332 (S63). Then, the process returns to the main processing.

Next, transfer processing will be described with reference to a flowchart of FIG. 16. This processing is performed if the Transfer icon 521 is selected or the "File" menu on the menu bar 511 is selected and "Transfer" menu is selected in a state where a "New folder" folder in the "Configurations" folder lower than the "Transfer Manager" folder in hierarchy is selected as shown on the TransferManager screen 505 of FIG. 11. If the processing is performed, a file stored in the transfer file name storage area 332 of the selected folder is transferred to a specified printer (printer to which this folder belongs). However, if the file to be transferred has extension "lbl", the process compares a printer specified in the "lbl file and the transfer-destination printer to which the selected folder belongs. If, as a result, it is decided that they are different, the process converts data into contents in accordance with the printer specified in the lbl file.

For example, suppose that the printer specified in the lbl file is of "QL-650TD". Suppose also that a specified tape is of type "24X24". However, if the transfer-destination printer is of "QL-1050", as shown in FIG. 4, the "QL-1050" printer cannot print information on a "24X24" type tape. Accordingly, out of tapes of types printable in the "QL-1050" printer, a tape closest to "24X24" is selected, so that the printer result is adjusted so as to match the tape. To select such a tape, for example, a difference in size from each of specified types of tapes with respect to the "24X24" tape size can be squared so that such a tape as to have the smallest squared value may be selected.

On the other hand, suppose that the printer specified in the lbl file is of "QL-650TD". Suppose also that a specified tape is of type "12X12". However, suppose that the transfer-destination printer is of "QL-1050". In this case, although the "QL-1050" printers can also print information on a "12X12" tape, the different printers have different printable regions and hence have different upper, lower, right, and left margins. Accordingly, even in a case where tapes are of the same type, if they have a margin value smaller than a minimum margin value of a transfer-destination printer, the margin value of the tape is converted into the margin value of the transfer-destination printer, in which case the print results, if influenced by that, will also be adjusted.

If the transfer processing of FIG. 16 starts, first the process decides whether the processing is finished on all files in the transfer file name storage areas 332 of a specified folder (S71). If there is any file to be read, the processing is yet to be finished (NO at S71), so that one file name is read (S72). Then, the process decides whether the file name has extension "lbl" (S73). If the extension is not "lbl" (NO at S73), data need not be converted. Therefore, the process creates transfer data to be sent to the printer directly from the data stored in the library storage area 123 (S78) and transfers it to the printer (S79) and then returns to S71.

On the other hand, if the extension is "lbl" (YES at S73), the process decides whether a printer specified in the lbl file (printer information) and the transfer-destination printer agree (S74) . If they agree (YES at S74), the data need not be converted. Therefore, the process creates transfer data to be sent to the printer directly from the data stored in the library storage area 123 (S78) and transfers it to the printer (S79) and then returns to S71. On the other hand, if they do not agree (NO at S74), the data needs to be converted. Therefore, the process reads a tape type of the transfer data (S75), references printable tape types of the transfer-destination printer from the printer information storage area 121, and searches for a tape type closest to a tape type specified in the transfer data acquired at S75 (S76) . Then, the transfer data is converted so as to match the tape type searched for (S77). The process then creates transfer data to be sent to the printer from the post-conversion data (S78) and transfers it to the printer (S79) and then returns to S71.

Then, the process repeats the processing from S71 to S79 until there is no more file name to be read and ends the processing and returns to the main processing.

As described above, on the TransferManager screens 501 through 505 as shown in FIGS. 7 through 11 respectively, first the user specifies a file to be transferred in a folder lower than the "Library" folder in hierarchy. Then, he can specify the file to be transferred to a printer by attaching it to a folder of the transfer-destination printer lower than the "TransferManager" folder in hierarchy. In this case, by selecting a transfer-destination printer in the printer selection list box 523, only a file of data of a type that can be printed in this printer is displayed in the details display region 514. Therefore, the user can easily select a file because he need not remember which printer can print which type of data or reference a manual. Further, he will not encounter an error due to mistaken transfer of a file of unprintable data. For example, since a printer having model name "PT-9600" cannot print data having extension "csv" (see FIG. 3), its file is not displayed in the details display region 514 and so cannot be selected by the user as a file to be transferred.

It should be noted that the transfer data creation apparatus and program of the present disclosure is not limited to the above-described embodiment but, needless to say, can be modified variously without departing from the gist of the present disclosure. For example, the above embodiment has been described using seven extensions "lbl", "paf", "bmp", "csv", "pmt", "jpg", and "txt". However, data that can be stored in the library storage area 123 may have any other extension. Also, the types of data that can be printed by a printer are not limited to the above-described ones. Further, although the above embodiment has been described with reference to a tape printer that uses a thermal head, needless to say, any other print types of printers such as an ink jet printer and a laser printer may be used. Moreover, needless to say, the substrate may be, for example, cut-sheets or continuous forms in place of tapes.

Further, in the above-described embodiment, the one details display region 514 has been provided to display contents of a folder selected in the folder display region 513. However, for example, the details display region for the "Library" folder and that for the "Transfer Manager" folder may be provided separately from each other.

Further, the above embodiment has enabled transfer up to a printer by the transfer data creation program. However, the transfer data creation program may be devised to disable transfer up to a printer but perform processing up to a point in time for creating print data so that created print data would be transferred by any other program. Also, the created print data may be recorded in a recording medium and read into any other apparatus to be transferred to a printer or read into it. Further, although the above embodiment has assigned keys of a printer to data and transferred them to the printer, only the data may be transferred to the printer. File names may also be displayed on the display of the printer so that the user can select any one of them. Further, only one file may be stored in a printer so that the data would be printed in response to a print instruction, if given.

## Claims

1. A transfer data creation apparatus (10) comprising:
an I/O interface (104) to be connected to a tape printer (21) ;
a display device (112) that is adapted to display information;
a data storage device (123) that is adapted to store a plurality of types of data;
a data information display control device (101) that is adapted to selectively display, on the display device (112), data information which relates to the data stored in the data storage device (123) and contains at least a name of the data;
a transfer data specification device that is adapted to select the data information displayed on the display device (112) to thereby specify such a data piece of the data stored in the data storage device (123) as to be transferred from the transfer data creation apparatus (10) to the tape printer (21) so that the data piece may be printed by the tape printer (21);
a specified data display control device (101) that is adapted to display on the display device (112) the data information of specified data, which is the data specified by the transfer data specification device; and
a transfer data creation device (101) that is adapted to create transfer data which is used to transfer the specified data from the transfer data creation apparatus (10) to the tape printer (21);
a printable type storage device (122) that is adapted to store enabled type information which identifies a type of the data that can be printed for each of the tape printers (21) that can be connected to the transfer data creation apparatus; a transfer destination printer specification device (523) that is adapted to specify a transfer destination printer from data including printer information stored in the data storage area, which is the tape printer to which the transfer data is to be transferred from the transfer data creation apparatus (10); and
a data extraction device (101) that is adapted to extract the data of a type printable in the transfer destination printer specified by the transfer destination printer specification device (523) from the data stored in the data storage device (123) based on the enabled type information,
wherein if the transfer destination printer is specified by the transfer destination printer specification device (523), the data information display control device is adapted to display only the data information of extracted data, which is the data extracted by the data extraction device (101), wherein:
the data including printer information specifies the type of the tape printer (21) and is stored beforehand in the data storage device (123);
and further comprising: a data conversion device (101) that is adapted to convert the data including the printer information by changing a value of an item about at least a minimum printable margin of the tape to a value that corresponds to another tape printer different from the tape printer specified by the printer information; and
if the transfer-destination printer is specified by the transfer-destination printer specification device (523), when creating the transfer data of the data including the printer information, the transfer data creation device (101) is adapted to convert the data into the data of the transfer-destination printer by using the data conversion device (101) to thereby create the transfer data.

2. The transfer data creation apparatus (10) according to claim 1, wherein the enabled type information is an extension, of the data.

3. The transfer data creation apparatus (10) according to claim 1 or 2, wherein:
the tape printer (21) includes a plurality of keys (26);
and further comprising; a key assignment device (101) that is adapted to assign the specified data specified by the transfer data specification device to at least one of the plurality of keys (26) of the tape printer (21); and
the transfer data creation device (101) is adapted to create the transfer data by attaching, to the specified data, key information which identifies the at least one key assigned to the specified data.

4. The transfer data creation apparatus (10) according to any one of claims 1 to 3, comprising:
an item information display control device (101) that is adapted to selectively display, on the display device (112), item information which indicates at least one of predetermined items;
an item information selection device (513) that is adapted to select one item information piece out of the item information pieces displayed by the item information display control device (101);
an item-relevant data extraction device (101) that is adapted to extract data that corresponds to the predetermined item indicated by the item information selected by the item information selection device (513) from the data stored in the data storage device (123); and
an item data display control device (101) that is adapted to display on the display device (112) the data information of the data extracted by the item-relevant data extraction device (101).

5. The transfer data creation apparatus (10) according to claim 4, comprising an extraction control device (101) that, if the transfer-destination printer is already specified by the transfer-destination printer specification device (523), further is adapted to extract the data of such a type as to be printable in the transfer-destination printer by using the data extraction device (101) from the data extracted by the item-relevant data extraction device (101),
wherein the item data display control device (101) is adapted to display only the data information of the data extracted by the extraction control device (101).

6. The transfer data creation apparatus (10) according to claim 5, wherein the predetermined item is the type of the data.

7. The transfer data creation apparatus (10) according to claim 5 or 6, comprising, supposing a display portion on which the data information is displayed by the data information display control device (101) as a data information display portion (514), a display portion on which the data information of the specified data is displayed by the specified data display control device (101) as a specified data information display portion (514), and a display portion on which the data information of the item data is displayed by the item data display control device (101) as an item data information display portion (514):
a screen display control device (101) that is adapted to display on the display device (112) a display screen comprising:
a details display portion (514) that is adapted to display any one of the data information display portion, the specified data information display portion, and the item data information display portion; and
a display selection portion (513) that is adapted to selectively display identification information pieces which respectively indicate the data information display portion, the specified data information display portion, and the item data information display portion on the details display portion; and
a details display control device (101) that is adapted to display the display portion selected by the display selection portion (513) on the details display portion (514).

8. The transfer data creation apparatus (10) according to claim 7, wherein:
the display selection portion (513) and an item information selection portion that is adapted to selectively display the item information on the display device (112) by the item information display control device (101) form a hierarchy structure; and
the item information selection portion is provided lower than the identification information pieces which indicate the item data information display portion (514) in the display selection portion (513).

9. The transfer data creation apparatus (10) according to any one of claims 1 to 8, comprising a transfer data transfer device (101) that is adapted to transfer the transfer data created by the transfer data creation device (101) to the tape printer (21).

10. A computer-readable recording medium, in which a transfer data creation program is recorded, the program performs, when running on a transfer data creation apparatus (10) comprising an I/O interface (104) to be connected to a tape printer (21), the following steps:
a data storage step of storing a plurality of types of data;
a printable type storage step of storing enabled type information which identifies a type of the data that can be printed for each of tape printers that can be connected to the transfer data creation apparatus;
a transfer destination printer specification step of specifying a transfer destination printer from data including printer information stored in the data storage area, which is the tape printer to which transfer data to be printed is to be transferred from the transfer data creation apparatus (10);
a data extraction step of extracting the data of a type printable in the transfer destination printer specified in the transfer destination printer specification step from the data stored in the data storage step based on the enabled type information;
a data information display control step of selectively displaying, on an information indicating display device, data information which relates to the data stored in the data storage step and contains at least a name of the data and also, if the transfer destination printer is already specified in the transfer destination printer specification step, displaying only the data information of extracted data, which is the data extracted in the data extraction step;
a transfer data specification step of selecting the data information displayed on the display device to thereby specify such a data piece of the data stored in the data storage step as to be transferred from the transfer data creation apparatus (10) to the tape printer;
a specified data display control step of displaying on the display device the data information of specified data, which is the data specified in the transfer data specification step; and
a transfer data creation step of creating the transfer data which is used to transfer the specified data from the transfer data creation apparatus (10) to the tape printer, wherein:
the data including printer information specifies the type of the tape printer and is stored beforehand in the data storage step;
and further comprising: a data conversion step of converting the data including the printer information by changing a value of an item about at least a minimum printable margin of the data to a value that corresponds to another tape printer different from the tape printer specified by the printer information; and
if the transfer-destination printer is specified in the transfer-destination printer specification step, when creating the transfer data of the data including the printer information, the transfer data creation step converts the data into the data of the transfer-destination printer in the data conversion step to thereby cerate the transfer data.

11. The computer-readable recording medium according to claim 10, wherein the enabled type information is an extension of the data.

12. The computer-readable recording medium according to claim 10 or 11, wherein:
the tape printer includes a plurality of keys;
and further comprising; a key assignment step of assigning the specified data specified in the transfer data specification step to at least one of the plurality of keys of the tape printer; and
the transfer data creation step creates the transfer data by attaching, to the specified data, key information which identifies the at least one key assigned to the specified data.

13. The computer-readable recording medium according to any one of claims 10 to 12, comprising:
an item information display control step of selectively displaying, on the display step, item information which indicates at least one of predetermined items;
an item information selection step of selecting one item information piece out of the item information pieces displayed in the item information display control step;
an item-relevant data extraction step of extracting data that corresponds to the predetermined item indicated by the item information selected in the item information selection step from the data stored in the data storage step; and
an item data display control step of displaying on the display apparatus the data information of the data extracted in the item-relevant data extraction step.

14. The computer-readable recording medium according to claim 13, comprising an extraction control step of, if the transfer-destination printer is already specified in the transfer-destination printer specification step, further extracting the data of such a type as to be printable in the transfer-destination printer in the data extraction step from the data extracted in the item-relevant data extraction step,
wherein the item data display control step displays only the data information of the data extracted in the extraction control step.

15. The computer-readable recording medium according to claim 14, wherein the predetermined item is the type of the data.

16. The computer-readable recording medium according to claim 14 or 15, comprising, supposing a display portion on which the data information is displayed in the data information display control step as a data information display portion, a display portion on which the data information of the specified data is displayed in the specified data display control step as a specified data information display portion, and a display portion on which the data information of the item data is displayed in the item data display control step as an item data information display portion:
a screen display control step of displaying on the display apparatus a display screen comprising:
a details display portion that displays any one of the data information display portion, the specified data information display portion, and the item data information display portion; and
a display selection portion that selectively display identification information pieces which respectively indicate the data information display portion, the specified data information display portion, and the item data information display portion on the details display portion; and
a details display control step of displaying the display portion selected by the display selection portion on the details display portion.

17. The computer-readable recording medium according to claim 16, wherein:
the display selection portion and an item information selection portion that is adapted to selectively display the item information form a hierarchy structure; and
the item information selection portion is provided lower than the identification information pieces which indicate the item data information display portion in the display selection portion.

18. The computer-readable recording medium according to any one of claims 10 to 17, comprising a transfer data transfer step of transferring the transfer data created in the transfer data creation step to the tape printer.

## Patentansprüche

1. Transferdatenerzeugungsgerät (10) mit:
einer I/O-Schnittstelle (104), die mit einem Banddrucker (21) zu verbinden ist;
einer Anzeigevorrichtung (112), die daran angepasst ist, Informationen anzuzeigen;
einer Datenspeichervorrichtung (123), die daran angepasst ist, viele Datenarten zu speichern;
einer Dateninformationsanzeigesteuervorrichtung (101), die daran angepasst ist, an der Anzeigevorrichtung (112) wahlweise Dateninformationen anzuzeigen, die sich auf die in der Datenspeichervorrichtung (123) gespeicherten Daten beziehen und zumindest einen Namen der Daten enthalten;
einer Transferdatenspezifikationsvorrichtung, die daran angepasst ist, die an der Anzeigevorrichtung (112) angezeigten Dateninformationen auszuwählen, um dadurch ein Datenteil der in der Datenspeichervorrichtung (123) gespeicherten Daten als solche zu spezifizieren, die von dem Transferdatenerzeugungsgerät (10) zu dem Banddrucker (21) zu transferieren sind, so dass das Datenteil durch den Banddrucker (21) gedruckt werden kann;
einer Anzeigesteuervorrichtung (101) von spezifizierten Daten, die daran angepasst ist, an der Anzeigevorrichtung (112) die Dateninformationen der spezifizierten Daten anzuzeigen, die die Daten sind, die durch die Transferdatenspezifikationsvorrichtung spezifiziert sind; und
einer Transferdatenerzeugungsvorrichtung (101), die daran angepasst ist, Transferdaten zu erzeugen, die zum Transferieren der spezifizierten Daten von dem Transferdatenerzeugungsgerät (10) zu dem Banddrucker (21) zu erzeugen;
einer Speichervorrichtung (122) einer druckbaren Art, die daran angepasst ist, Informationen einer möglichen Art zu speichern, die eine Art der Daten identifiziert, die durch die jeweiligen Banddrucker (21) gedruckt werden kann, der mit dem Transferdatenerzeugungsgerät verbunden werden kann;
einer Transferzieldruckerspezifikationsvorrichtung (523), die daran angepasst ist, einen Transferzieldrucker aus Daten zu spezifizieren, die Druckerinformationen behalten, die in dem Datenspeicherbereich gespeichert sind, der jener Banddrucker ist, zu dem die Transferdaten von dem Transferdatenerzeugungsgerät (10) zu transferieren sind; und
einer Datenextraktionsvorrichtung (101), die daran angepasst ist, die Daten einer druckbaren Art in dem Transferzieldrucker zu extrahieren, der durch die Transferzieldruckerspezifikationsvorrichtung (523) spezifiziert ist, und zwar aus den Daten, die in der Datenspeichervorrichtung (123) gespeichert sind, auf der Grundlage der Informationen der möglichen Art,
wobei, falls der Transferzieldrucker durch die Transferzieldruckerspezifikationsvorrichtung (523) spezifiziert ist, die Dateninformationsanzeigesteuervorrichtung daran angepasst ist, nur die Dateninformationen der extrahierten Daten anzuzeigen, die die Daten sind, die durch die Datenextraktionsvorrichtung (101) extrahiert sind, wobei:
die Daten einschließlich der Druckerinformationen die Art des Banddruckers (21) spezifizieren und im Voraus in der Datenspeichervorrichtung (123) gespeichert werden;
und das des Weiteren folgendes aufweist: eine Datenwandlervorrichtung (101), die daran angepasst ist, die Daten einschließlich der Druckerinformationen zu wandeln, indem ein Wert eines Gegenstands zumindest über eine minimal druckbare Spanne des Bandes zu einem Wert geändert wird, der einem anderen Banddrucker entspricht, der sich von dem Banddrucker unterscheidet, der durch die Druckerinformationen spezifiziert ist; und
falls der Transferzieldrucker durch die Transferzieldruckerspezifikationsvorrichtung (523) spezifiziert ist, wenn die Transferdaten der Daten einschließlich der Druckerinformationen erzeugt werden, die Transferdatenerzeugungsvorrichtung (101) daran angepasst ist, die Daten zu den Daten des Transferzieldruckers zu wandeln, indem die Datenwandlervorrichtung (101) verwendet wird, um dadurch die Transferdaten zu erzeugen.

2. Transferdatenerzeugungsgerät (10) gemäß Anspruch 1, wobei die Informationen der möglichen Art Erweiterungen der Daten sind.

3. Transferdatenerzeugungsgerät (10) gemäß Anspruch 1 oder 2, wobei:
der Banddrucker (21) eine Vielzahl an Tasten (26) aufweist;
und des Weiteren folgendes aufweist: eine Tastenzuweisungsvorrichtung (101), die daran angepasst ist, die durch die Transferdatenspezifikationsvorrichtung spezifizierten Daten zumindest zu einer der vielen Tasten (26) des Banddruckers (21) zuzuweisen; und
die Transferdatenerzeugungsvorrichtung (101) daran angepasst ist, die Transferdaten zu erzeugen, indem zu den spezifizierten Daten Tasteninformationen angehängt werden, die die zumindest eine Taste identifizieren, die zu den spezifizierten Daten zugewiesen ist.

4. Transferdatenerzeugungsgerät (10) gemäß einem der Ansprüche 1 bis 3, mit:
einer Gegenstandsinformationsanzeigesteuervorrichtung (101), die daran angepasst ist, an der Anzeigevorrichtung (112) wahlweise Gegenstandsinformationen anzuzeigen, die zumindest einen von vorbestimmten Gegenständen angeben;
einer Gegenstandsinformationsauswahlvorrichtung (513), die daran angepasst ist, ein Gegenstandsinformationsteil von Gegenstandsinformationsteilen auszuwählen, die durch die Gegenstandsinformationsanzeigesteuervorrichtung (101) angezeigt werden;
einer Extraktionsvorrichtung (101) von gegenstandsrelevanten Daten, die daran angepasst ist, Daten zu extrahieren, die dem vorbestimmten Gegenstand entsprechen, der durch die Gegenstandsinformationen angegeben ist, die durch die Gegenstandsinformationsauswahlvorrichtung (513) ausgewählt sind, und zwar von den Daten, die in der Datenspeichervorrichtung (123) gespeichert sind; und
einer Gegenstandsdatenanzeigesteuervorrichtung (101), die daran angepasst ist, an der Anzeigevorrichtung (112) die Dateninformationen der Daten anzuzeigen, die durch die Extraktionsvorrichtung (101) von gegenstandsrelevanten Daten extrahiert sind.

5. Transferdatenerzeugungsgerät (10) gemäß Anspruch 4, mit einer Extraktionssteuervorrichtung (101), die, falls der Transferzieldrucker bereits durch die Transferzieldruckerspezifikationsvorrichtung (523) spezifiziert ist, des Weiteren daran angepasst ist, die Daten einer derartigen Art zu extrahieren, die durch den Transferzieldrucker druckbar sind, indem die Datenextraktionsvorrichtung (101) verwendet wird, und zwar aus den Daten, die durch die Extraktionsvorrichtung (101) von gegenstandsrelevanten Daten extrahiert sind,
wobei die Gegenstandsdatenanzeigesteuervorrichtung (101) daran angepasst ist, nur die Dateninformationen der Daten anzuzeigen, die durch die Extraktionssteuervorrichtung (101) extrahiert sind.

6. Transferdatenerzeugungsgerät (10) gemäß Anspruch 5, wobei der vorbestimmte Gegenstand die Art der Daten ist.

7. Transferdatenerzeugungsgerät (10) gemäß Anspruch 5 oder 6, mit einem Anzeigeabschnitt, an dem die Dateninformationen durch die Dateninformationsanzeigesteuervorrichtung (101) angezeigt werden, und zwar als ein Dateninformationsanzeigeabschnitt (514), einem Anzeigeabschnitt, an dem die Dateninformationen der spezifizierten Daten durch die Anzeigesteuervorrichtung (101) von spezifizierten Daten angezeigt wird, und zwar als ein Informationsanzeigeabschnitt (514) von spezifizierten Daten, und einem Anzeigeabschnitt, an dem die Dateninformationen der Gegenstandsdaten durch die Gegenstandsdatenanzeigesteuervorrichtung (101) angezeigt werden, und zwar als ein Gegenstandsdateninformationsanzeigeabschnitt (514);
einer Bildschirmanzeigesteuervorrichtung (101), die daran angepasst ist, an der Anzeigevorrichtung (112) einen Bildschirm anzuzeigen, mit:
einem Einzelheitenanzeigeabschnitt (514), der daran angepasst ist, einen von dem Dateninformationsanzeigeabschnitt, den Informationsanzeigeabschnitt von spezifizierten Daten und den Gegenstandsdateninformationsanzeigeabschnitt anzuzeigen; und
einem Anzeigeauswahlabschnitt (513), der daran angepasst ist, Identifikationsinformationsteile wahlweise anzuzeigen, die den Dateninformationsanzeigeabschnitt, den Informationsanzeigeabschnitt von spezifizierten Daten und den Gegenstandsdateninformationsanzeigeabschnitt angeben, und zwar an dem Einzelheitenanzeigeabschnitt; und
einer Einzelheitenanzeigesteuervorrichtung (101), die daran angepasst ist, den durch den Anzeigeauswahlabschnitt (513) ausgewählten Anzeigeabschnitt an dem Einzelheitenanzeigeabschnitt (514) anzuzeigen.

8. Transferdatenerzeugungsgerät (10) gemäß Anspruch 7, wobei:
der Anzeigeauswahlabschnitt (513) und ein Gegenstandsinformationsauswahlabschnitt, der daran angepasst ist, die Gegenstandsinformationen wahlweise an der Anzeigevorrichtung (112) anzuzeigen, und zwar durch die Gegenstandsinformationsanzeigesteuervorrichtung (101), eine Hierarchiestruktur bilden; und
der Gegenstandsinformationsauswahlabschnitt niedriger vorgesehen ist als die Identifikationsinformationsteile, die den Gegenstandsdateninformationsanzeigeabschnitt (514) in dem Anzeigeauswahlabschnitt (513) angeben.

9. Transferdatenerzeugungsgerät (10) gemäß einem der Ansprüche 1 bis 8, mit einer Transferdatentransfervorrichtung (101), die daran angepasst ist, die durch die Transferdatenerzeugungsvorrichtung (101) erzeugten Transferdaten zu dem Banddrucker (21) zu transferieren.

10. Computerlesbares Speichermedium, in dem ein Transferdatenerzeugungsprogramm aufgezeichnet ist, wobei das Programm, wenn es auf einem Transferdatenerzeugungsgerät (10) läuft, das eine I/O-Schnittstelle (104) aufweist, die mit dem Banddrucker (21) zu verbinden ist, die folgenden Schritte durchführt:
einen Datenspeicherschritt zum Speichern von vielen Datenarten;
einen Speicherschritt einer druckbaren Art, der Informationen einer möglichen Art speichert, die eine Art der Daten identifizieren, die für den jeweiligen Banddrucker gedruckt werden können, der mit dem Transferdatenerzeugungsgerät verbunden werden kann;
einen Transferzieldruckerspezifikationsschritt zum Spezifizieren eines Transferzieldruckers aus Daten einschließlich Druckerinformationen, die in dem Datenspeicherbereich gespeichert sind, der jener Banddrucker ist, zu dem die zu druckenden Daten von dem Transferdatenerzeugungsgerät (10) zu transferieren sind;
einen Datenextraktionsschritt zum Extrahieren der Daten einer druckbaren Art in dem Transferzieldrucker, der bei dem Transferzieldruckerspezifikationsschritt spezifiziert wird, und zwar aus den Daten, die in dem Datenspeicherschritt gespeichert werden, auf der Grundlage der Informationen der möglichen Art;
einen Dateninformationsanzeigesteuerschritt, um an einer Informationseingabeanzeigevorrichtung wahlweise Dateninformationen anzuzeigen, die sich auf die in dem Datenspeicherschritt gespeicherten Daten beziehen und zumindest einen Namen der Daten enthalten, und um auch, falls der Transferzieldrucker bereits bei dem Transferzieldruckerspezifikationsschritt spezifiziert wurde, nur die Dateninformationen der extrahierten Daten anzuzeigen, die die Daten sind, die bei dem Datenextraktionsschritt extrahiert werden;
einen Transferdatenspezifikationsschritt zum Auswählen der an der Anzeigevorrichtung angezeigten Dateninformationen, um dadurch ein Datenteil der bei dem Datenspeicherschritt gespeicherten Daten als solche zu spezifizieren, die von dem Transferdatenerzeugungsgerät (10) zu dem Banddrucker zu transferieren sind;
einen Anzeigesteuerschritt von spezifizierten Daten, um an der Anzeigevorrichtung die Dateninformationen der spezifizierten Daten anzuzeigen, die die Daten sind, die bei dem Transferdatenspezifikationsschritt spezifiziert werden; und
einen Transferdatenerzeugungsschritt zum Erzeugen der Transferdaten, die zum Transferieren der spezifizierten Daten von dem Transferdatenerzeugungsgerät (10) zu dem Banddrucker verwendet werden, wobei:
die Daten einschließlich der Druckerinformationen die Art des Banddruckers spezifizieren und im Voraus bei dem Datenspeicherschritt gespeichert werden;
und des Weiteren folgendes aufweist: einen Datenwandlerschritt zum Wandeln der Daten einschließlich der Druckerinformationen, indem ein Wert eines Gegenstandes zumindest über eine minimal druckbare Spanne der Daten zu einem Wert geändert wird, der einem anderen Banddrucker entspricht, der sich von dem Banddrucker unterscheidet, der durch die Druckerinformationen spezifiziert wird; und
falls der Transferzieldrucker bei dem Transferzieldruckerspezifikationsschritt spezifiziert wird, wenn die Transferdaten der Daten einschließlich der Druckerinformationen erzeugt werden, der Transferdatenerzeugungsschritt die Daten in die Daten des Transferzieldruckers bei dem Datenwandlerschritt wandelt, um dadurch die Transferdaten zu erzeugen.

11. Computerlesbares Aufzeichnungsmedium gemäß Anspruch 10, wobei die Informationen der möglichen Art Erweiterungen der Daten sind.

12. Computerlesbares Aufzeichnungsmedium gemäß Anspruch 10 oder 11, wobei:
der Banddrucker eine Vielzahl an Tasten aufweist;
und des Weiteren einen Tastenzuweisungsschritt aufweist, um die bei dem Transferdatenspezifikationsschritt spezifizierten Daten zumindest zu einer der vielen Tasten des Banddruckers zuzuweisen; und
der Transferdatenerzeugungsschritt die Transferdaten erzeugt, indem zu den spezifizierten Daten Tasteninformationen angehängt werden, die die zumindest eine Taste identifizieren, die zu den spezifizierten Daten zugewiesen wurde.

13. Computerlesbares Aufzeichnungsmedium gemäß einem der Ansprüche 10 bis 12, mit:
einem Gegenstandsinformationsanzeigesteuerschritt, um wahlweise bei dem Anzeigeschritt Gegenstandsinformationen anzuzeigen, die zumindest einen von vorbestimmten Gegenständen angeben;
einem Gegenstandsinformationsauswahlschritt, um ein Gegenstandsinformationsteil von den Gegenstandsinformationsteilen auszuwählen, die bei dem Gegenstandsinformationsanzeigesteuerschritt angezeigt werden;
einem Extraktionsschritt von gegenstandsrelevanten Daten, um Daten zu extrahieren, die dem vorbestimmten Gegenstand entsprechen, der durch die Gegenstandsinformationen angegeben wird, die bei dem Gegenstandsinformationsauswahlschritt ausgewählt werden, und zwar aus den Daten, die bei dem Datenspeicherschritt gespeichert werden; und
einem Gegenstandsdatenanzeigesteuerschritt, um an dem Anzeigegerät die Dateninformationen der Daten anzuzeigen, die bei dem Extraktionsschritt der gegenstandsrelevanten Daten extrahiert werden.

14. Computerlesbares Aufzeichnungsmedium gemäß Anspruch 13, mit einem Extraktionssteuerschritt, um, falls der Transferzieldrucker bereits bei dem Transferzieldruckerspezifikationsschritt spezifiziert wurde, des Weiteren die Daten einer derartigen Art zu extrahieren, die durch den Transferzieldrucker druckbar sind, und zwar bei dem Datenextraktionsschritt aus den Daten, die bei dem Extraktionsschritt von gegenstandsrelevanten Daten extrahiert werden,
wobei der Gegenstandsdatenanzeigesteuerschritt nur die Dateninformationen der Daten anzeigt, die bei dem Extraktionssteuerschritt extrahiert werden.

15. Computerlesbares Aufzeichnungsmedium gemäß Anspruch 14, wobei der vorbestimmte Gegenstand die Art der Daten ist.

16. Computerlesbares Aufzeichnungsmedium gemäß Anspruch 14 oder 15, mit einem Anzeigeabschnitt, an dem die Dateninformationen bei dem Dateninformationsanzeigesteuerschritt als ein Dateninformationsanzeigeabschnitt angezeigt werden, einem Anzeigeabschnitt, an dem die Dateninformationen der spezifizierten Daten bei dem Anzeigesteuerschritt von spezifizierten Daten als ein Informationsanzeigeabschnitt von spezifizierten Daten angezeigt werden, und an einem Anzeigeabschnitt, an dem die Dateninformationen der Gegenstandsdaten bei dem Gegenstandsdatenanzeigesteuerschritt als ein Gegenstandsdateninformationsanzeigeabschnitt angezeigt werden;
einem Bildschirmanzeigesteuerschritt, um an dem Anzeigegerät einen Bildschirm anzuzeigen, mit:
einem Einzelheitenanzeigeabschnitt, der den Dateninformationsanzeigeabschnitt, den Informationsanzeigeabschnitt von spezifizierten Daten und den Gegenstandsdateninformationsanzeigeabschnitt anzeigt; und
einem Anzeigeauswahlabschnitt, der wahlweise Identifikationsinformationsteile anzeigt, die den Dateninformationsanzeigeabschnitt, den Informationsanzeigeabschnitt von spezifizierten Daten und den Gegenstandsdateninformationsanzeigeabschnitt angeben, und zwar an dem Einzelheitenanzeigeabschnitt; und
einem Einzelheitenanzeigesteuerschritt, um den durch den Anzeigeauswahlabschnitt ausgewählten Anzeigeabschnitt an dem Einzelheitenanzeigeabschnitt anzuzeigen.

17. Computerlesbares Aufzeichnungsmedium gemäß Anspruch 16, wobei:
der Anzeigeauswahlabschnitt und ein Gegenstandsinformationsauswahlabschnitt, der daran angepasst ist, wahlweise die Gegenstandsinformationen anzuzeigen, eine Hierarchiestruktur bilden; und
der Gegenstandsinformationsauswahlabschnitt niedriger vorgesehen ist als die Identifikationsinformationsteile, die den Gegenstandsdateninformationsanzeigeabschnitt bei dem Anzeigeauswahlabschnitt angeben.

18. Computerlesbares Aufzeichnungsmedium gemäß einem der Ansprüche 10 bis 17, mit einem Transferdatentransferschritt, um die Transferdaten, die bei dem Transferdatenerzeugungsschritt erzeugt werden, zu dem Banddrucker zu transferieren.

## Revendications

1. Appareil de création de données de transfert (10) comprenant :
une interface I/O (104) destinée à être connectée à une imprimante à ruban (21) ;
un dispositif d'affichage (112) qui est adapté pour afficher des informations ;
un dispositif de stockage de données (123) qui est adapté pour stocker une pluralité de types de données ;
un dispositif de commande d'affichage d'informations de données (101) qui est adapté pour afficher sélectivement, sur le dispositif d'affichage (112), des informations de données qui concernent les données stockées dans le dispositif de stockage de données (123) et contiennent au moins un nom des données ;
un dispositif de spécification de données de transfert qui est adapté pour sélectionner les informations de données affichées sur le dispositif d'affichage (112) pour spécifier ainsi un tel élément de données des données stockées dans le dispositif de stockage de données (123) comme étant à transférer de l'appareil de création de données de transfert (10) à l'imprimante à ruban (21) de manière que l'élément de données puisse être imprimé par l'imprimante à ruban (21) ;
un dispositif de commande d'affichage de données spécifiées (101) qui est adapté pour afficher sur le dispositif d'affichage (112) les informations de données de données spécifiées, qui sont les données spécifiées par le dispositif de spécification de données de transfert ; et
un dispositif de création de données de transfert (101) qui est adapté pour créer des données de transfert qui sont utilisées pour transférer les données spécifiées de l'appareil de création de données de transfert (10) à l'imprimante à ruban (21) ;
un dispositif de stockage de type imprimable (122) qui est adapté pour stocker des informations de type autorisé qui identifient un type des données qui peuvent être imprimées pour chacune des imprimantes à ruban (21) qui peuvent être connectées à l'appareil de création de données de transfert ;
un dispositif de spécification d'imprimante de destination de transfert (523) qui est adapté pour spécifier une imprimante de destination de transfert à partir de données comprenant des informations d'imprimante stockées dans la zone de stockage de données, qui est l'imprimante à ruban à laquelle les données de transfert doivent être transférées à partir de l'appareil de création de données de transfert (10) ; et
un dispositif d'extraction de données (101) qui est adapté pour extraire les données d'un type imprimable dans l'imprimante de destination de transfert spécifiée par le dispositif de spécification d'imprimante de destination de transfert (523) à partir des données stockées dans le dispositif de stockage de données (123) sur la base des informations de type autorisé,
dans lequel, si l'imprimante de destination de transfert est spécifiée par le dispositif de spécification d'imprimante de destination de transfert (523), le dispositif de commande d'affichage d'informations de données est adapté pour afficher seulement les informations de données de données extraites, qui sont les données extraites par le dispositif d'extraction de données (101), dans lequel :
les données comprenant des informations d'imprimante spécifient le type de l'imprimante à ruban (21) et sont stockées préalablement dans le dispositif de stockage de données (123) ;
et comprenant en outre : un dispositif de conversion de données (101) qui est adapté pour convertir les données comprenant les informations d'imprimante en changeant une valeur d'un article concernant au moins une marge imprimable minimale du ruban à une valeur qui correspond à une autre imprimante à ruban différente de l'imprimante à ruban spécifiée par les informations d'imprimante ; et
si l'imprimante de destination de transfert est spécifiée par le dispositif de spécification d'imprimante de destination de transfert (523), lors de la création des données de transfert des données comprenant les informations d'imprimante, le dispositif de création de données de transfert (101) est adapté pour convertir les données dans les données de l'imprimante de destination de transfert en utilisant le dispositif de conversion de données (101) pour créer ainsi les données de transfert.

2. Appareil de création de données de transfert (10) selon la revendication 1, dans lequel les informations de type autorisé sont une extension des données.

3. Appareil de création de données de transfert (10) selon la revendication 1 ou 2, dans lequel :
l'imprimante à ruban (21) comprend une pluralité de touches (26) ;
et comprenant en outre : un dispositif d'attribution de touche (101) qui est adapté pour attribuer les données spécifiées, spécifiées par le dispositif de spécification de données de transfert, à au moins une de la pluralité de touches (26) de l'imprimante à ruban (21) ; et
le dispositif de création de données de transfert (101) est adapté pour créer les données de transfert en joignant, aux données spécifiées, des informations de touche qui identifient l'au moins une touche attribuée aux données spécifiées.

4. Appareil de création de données de transfert (10) selon l'une quelconque des revendications 1 à 3, comprenant :
un dispositif de commande d'affichage d'informations d'article (101) qui est adapté pour afficher sélectivement, sur le dispositif d'affichage (112), des informations d'article qui indiquent au moins un parmi des articles prédéterminés ;
un dispositif de sélection d'informations d'article (513) qui est adapté pour sélectionner un élément d'informations d'article parmi les éléments d'informations d'article affichés par le dispositif de commande d'affichage d'informations d'article (101) ;
un dispositif d'extraction de données afférentes à l'article (101) qui est adapté pour extraire des données qui correspondent à l'article prédéterminé indiqué par les informations d'article sélectionnées par le dispositif de sélection d'informations d'article (513) à partir des données stockées dans le dispositif de stockage de données (123) ; et
un dispositif de commande d'affichage de données d'article (101) qui est adapté pour afficher sur le dispositif d'affichage (112) les informations de données des données extraites par le dispositif d'extraction de données afférentes à l'article (101).

5. Appareil de création de données de transfert (10) selon la revendication 4, comprenant un dispositif de commande d'extraction (101) qui, si l'imprimante de destination de transfert est déjà spécifiée par le dispositif de spécification d'imprimante de destination de transfert (523), est adapté en outre pour extraire les données d'un tel type comme étant imprimable dans l'imprimante de destination de transfert en utilisant le dispositif d'extraction de données (101) à partir des données extraites par le dispositif d'extraction de données afférentes à l'article (101),
dans lequel le dispositif d'extraction de données afférentes à l'article (101) est adapté pour afficher seulement les informations de données des données extraites par le dispositif d'extraction de données (101).

6. Appareil de création de données de transfert (10) selon la revendication 5, dans lequel l'article prédéterminé est le type de données.

7. Appareil de création de données de transfert (10) selon la revendication 5 ou 6, comprenant, en supposant une portion d'affichage sur laquelle les informations de données sont affichées par le dispositif de commande d'affichage d'informations de données (101) comme une portion d'affichage d'informations de données (514), une portion d'affichage sur laquelle les informations de données des données spécifiées sont affichées par le dispositif de commande d'affichage de données spécifiées (101) comme une portion d'affichage d'informations de données spécifiées (514), et une portion d'affichage sur laquelle les informations de données des données d'article sont affichées par le dispositif de commande d'affichage de données d'article (101) comme une portion d'affichage d'informations de données d'article (514) ;
un dispositif de commande d'affichage d'écran (101) qui est adapté pour afficher sur le dispositif d'affichage (112) un écran d'affichage comprenant :
une portion d'affichage de détails (514) qui est adaptée pour afficher une quelconque parmi la portion d'affichage d'informations de données, la portion d'affichage d'informations de données spécifiées et la portion d'affichage d'informations de données d'article ; et
une portion de sélection d'affichage (513) qui est adaptée pour afficher sélectivement des éléments d'informations d'identification qui indiquent respectivement la portion d'affichage d'informations de données, la portion d'affichage d'informations de données spécifiées et la portion d'affichage d'informations de données d'article sur la portion d'affichage de détails ; et
un dispositif de commande d'affichage de détails (101) qui est adapté pour afficher la portion d'affichage sélectionnée par la portion de sélection d'affichage (513) sur la portion d'affichage de détails (514).

8. Appareil de création de données de transfert (10) selon la revendication 7, dans lequel :
la portion de sélection d'affichage (513) et une portion de sélection d'informations d'article qui est adaptée pour afficher sélectivement les informations d'article sur le dispositif d'affichage (112) par le dispositif de commande d'affichage d'informations d'article (101) forment une structure hiérarchique ; et
la portion de sélection d'informations d'article est disposée plus bas que les éléments d'informations d'identification qui indiquent la portion d'affichage d'informations de données d'article (514) dans la portion de sélection d'affichage (513).

9. Appareil de création de données de transfert (10) selon l'une quelconque des revendications 1 à 8, comprenant un dispositif de transfert de données de transfert (101) qui est adapté pour transférer les données de transfert créées par le dispositif de création de données de transfert (101) à l'imprimante à ruban (21).

10. Support d'enregistrement lisible par ordinateur, dans lequel un programme de création de données de transfert est enregistré, le programme effectue, quand il est exécuté sur un appareil de création de données de transfert (10) comprenant une interface I/O (104) destinée à être connectée à une imprimante à ruban (21), les étapes suivantes :
une étape de stockage de données pour stocker une pluralité de types de données ;
une étape de stockage de type imprimable pour stocker des informations de type autorisé qui identifient un type des données qui peuvent être imprimées pour chacune des imprimantes à ruban qui peuvent être connectées à l'appareil de création de données de transfert ;
une étape de spécification d'imprimante de destination de transfert pour spécifier une imprimante de destination de transfert à partir de données comprenant des informations d'imprimante stockées dans la zone de stockage de données, qui est l'imprimante à ruban à laquelle des données de transfert à imprimer doivent être transférées à partir de l'appareil de création de données de transfert (10) ;
une étape d'extraction de données pour extraire les données d'un type imprimable dans l'imprimante de destination de transfert spécifiée dans l'étape de spécification d'imprimante de destination de transfert à partir des données stockées dans l'étape de stockage de données sur la base des informations de type autorisé ;
une étape de commande d'affichage d'informations de données pour afficher sélectivement, sur un dispositif d'affichage indiquant des informations, des informations de données qui concernent les données stockées dans l'étape de stockage de données et contiennent au moins un nom des données et également, si l'imprimante de destination de transfert est déjà spécifiée dans l'étape de spécification d'imprimante de destination de transfert, pour afficher seulement les informations de données de données extraites, qui sont les données extraites dans l'étape d'extraction de données ;
une étape de spécification de données de transfert pour sélectionner les informations de données affichées sur le dispositif d'affichage pour spécifier ainsi un tel élément de données des données stockées dans l'étape de stockage de données comme étant à transférer de l'appareil de création de données de transfert (10) à l'imprimante à ruban ;
une étape de commande d'affichage de données spécifiées pour afficher sur le dispositif d'affichage les informations de données de données spécifiées, qui sont les données spécifiées dans l'étape de spécification de données de transfert ; et
une étape de création de données de transfert pour créer des données de transfert qui sont utilisées pour transférer les données spécifiées de l'appareil de création de données de transfert (10) à l'imprimante à ruban, dans lequel :
les données comprenant des informations d'imprimante spécifient le type de l'imprimante à ruban et sont stockées préalablement dans l'étape de stockage de données ;
et comprenant en outre : une étape de conversion de données pour convertir les données comprenant les informations d'imprimante en changeant une valeur d'un article concernant au moins une marge imprimable minimale des données à une valeur qui correspond à une autre imprimante à ruban différente de l'imprimante à ruban spécifiée par les informations d'imprimante ; et
si l'imprimante de destination de transfert est spécifiée dans l'étape de spécification d'imprimante de destination de transfert, lors de la création des données de transfert des données comprenant les informations d'imprimante, l'étape de création de données de transfert convertit les données dans les données de l'imprimante de destination de transfert dans l'étape de conversion de données pour créer ainsi les données de transfert.

11. Support d'enregistrement lisible par ordinateur selon la revendication 10, dans lequel les informations de type autorisé sont une extension des données.

12. Support d'enregistrement lisible par ordinateur selon la revendication 10 ou 11, dans lequel :
l'imprimante à ruban comprend une pluralité de touches ;
et comprenant en outre : une étape d'attribution de touche pour attribuer les données spécifiées, spécifiées dans l'étape de spécification de données de transfert, à au moins une de la pluralité de touches de l'imprimante à ruban ; et
l'étape de création de données de transfert pour créer les données de transfert en joignant, aux données spécifiées, des informations de touche qui identifient l'au moins une touche attribuée aux données spécifiées.

13. Support d'enregistrement lisible par ordinateur selon l'une quelconque des revendications 10 à 12, comprenant :
une étape de commande d'affichage d'informations d'article pour afficher sélectivement, sur l'étape d'affichage, des informations d'article qui indiquent au moins un parmi des articles prédéterminés ;
une étape de sélection d'informations d'article pour sélectionner un élément d'informations d'article parmi les éléments d'informations d'article affichés dans l'étape de commande d'affichage d'informations d'article ;
une étape d'extraction de données afférentes à l'article pour extraire des données qui correspondent à l'article prédéterminé indiqué par les informations d'article sélectionnées dans l'étape de sélection d'informations d'article à partir des données stockées dans l'étape de stockage de données ; et
une étape de commande d'affichage de données d'article pour afficher sur le dispositif d'affichage les informations de données des données extraites dans l'étape d'extraction de données afférentes à l'article.

14. Support d'enregistrement lisible par ordinateur selon la revendication 13, comprenant une étape de commande d'extraction pour, si l'imprimante de destination de transfert est déjà spécifiée dans l'étape de spécification d'imprimante de destination de transfert, extraire en outre les données d'un tel type comme étant imprimable dans l'imprimante de destination de transfert dans l'étape d'extraction de données à partir des données extraites dans l'étape d'extraction de données afférentes à l'article,
dans lequel l'étape de commande d'affichage de données d'article affiche seulement les informations de données de données extraites dans l'étape de commande d'extraction.

15. Support d'enregistrement lisible par ordinateur selon la revendication 14, dans lequel l'article prédéterminé est le type des données.

16. Support d'enregistrement lisible par ordinateur selon la revendication 14 ou 15, comprenant, en supposant une portion d'affichage sur laquelle les informations de données sont affichées dans l'étape de commande d'affichage d'informations de données comme une portion d'affichage d'informations de données, une portion d'affichage sur laquelle les informations de données des données spécifiées sont affichées dans l'étape de commande d'affichage de données spécifiées comme une portion d'affichage d'informations de données spécifiées, et une portion d'affichage sur laquelle les informations de données des données d'article sont affichées dans l'étape de commande d'affichage de données d'article comme une portion d'affichage d'informations de données d'article :
une étape de commande d'affichage d'écran pour afficher sur le dispositif d'affichage un écran d'affichage comprenant :
une portion d'affichage de détails qui affiche une quelconque parmi la portion d'affichage d'informations de données, la portion d'affichage d'informations de données spécifiées et la portion d'affichage d'informations de données d'article ; et
une portion de sélection d'affichage qui affiche sélectivement des éléments d'informations d'identification qui indiquent respectivement la portion d'affichage d'informations de données, la portion d'affichage d'informations de données spécifiées et la portion d'affichage d'informations de données d'article sur la portion d'affichage de détails ; et
une étape de commande d'affichage de détails pour afficher la portion d'affichage sélectionnée par la portion de sélection d'affichage sur la portion d'affichage de détails.

17. Support d'enregistrement lisible par ordinateur selon la revendication 16, dans lequel :
la portion de sélection d'affichage et une portion de sélection d'informations d'article qui est adaptée pour afficher sélectivement les informations d'article forment une structure hiérarchique ; et
la portion de sélection d'informations d'article est disposée plus bas que les éléments d'informations d'identification qui indiquent la portion d'affichage d'informations de données d'article dans la portion de sélection d'affichage.

18. Support d'enregistrement lisible par ordinateur selon l'une quelconque des revendications 10 à 17, comprenant une étape de transfert de données de transfert pour transférer les données de transfert créées dans l'étape de création de données de transfert à l'imprimante à ruban.
